# EUROPEAN PATENT APPLICATION

(11) **EP 1 607 795 A1**
(43) Date of publication of application: **21.12.2005**
(21) Application number: 04722699.8
(22) Date of filing: 23.03.2004
(51) Int. Cl.: G03B 21/00

(54) **VIDEO DISPLAY SYSTEM**

(30) Priority: 26.03.2003 JP 2003085863; 29.08.2003 JP 2003307693
(71) Applicant: MATSUSHITA ELECTRIC INDUSTRIAL CO., LTD., Kadoma-shi, Osaka 571-8501 (JP)
(72) Inventor: HATTORI, Toshikazu, Yokohama-shi, Kanagawa, 226-0025 (JP); KUWABARA, Takashi, Kanagawa, 224-0054 Japan (JP); IBARAKI, Susumu, Yokohama-shi, Kanagawa, 225-002 (JP)
(74) Representative: Holmes, Miles Keeton
(86) International application number: PCT/JP2004/003947
(87) International publication number: WO 2004/086135

(57) **Abstract**

A video display system for suppressing variations of a video image display position and improving viewing comfort includes: a projector (1100) which projects a video projection light; and a screen unit (1150) which receives the video projection light and displays the video image. The screen unit (1150) includes first and second light detection units (1161 and 1162) which detect the received video projection light. The projector (1100) includes a control unit (1205) and an adjustment unit (106) which derive displacement in the display position of the video image based on the light detection results of the first and second light detection units (1161 and 1162) and control the output mode of the video projection light so as to suppress the displacement.

## Description

### Technical Field

The present invention relates to a video display system such as a projector for displaying still and moving images, and particularly to an in-vehicle video display system.

### Background Art

With the recent growing popularity of Rear Seat Entertainment (RSE) that is a way to enjoy video and music recorded on a wide variety of media such as digital versatile disks (DVD) and compact discs (CD) in the rear seat of a vehicle, an in-vehicle video display apparatus (video display system) designed to be used for such RSE are becoming increasingly common.

There are two types of such video display apparatuses. One is a standard direct-view type apparatus for displaying a picture source on a display of the apparatus so as to be directly viewed, and the other is a projection type apparatus for displaying an enlarged picture source on a screen outside the apparatus by enlarging and projecting the picture source onto a relatively small display element mounted in the apparatus.

The video display apparatus of direct-view type includes a cathode ray tube (CRT) display, a liquid crystal display (LCD) or a plasma display panel (PDP), for example.

A conventional video display apparatus of direct-view type that achieves RSE has been suggested (For example, see Japanese Laid-Open Patent Application No. 03-10476 Publication).

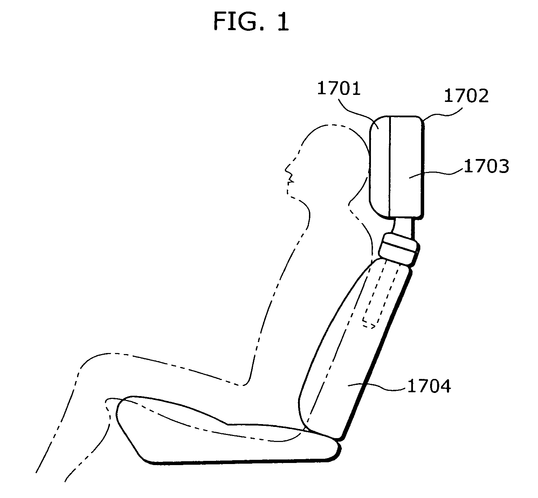

FIG. 1 is an illustration for describing a situation in which the above-mentioned video display apparatus of direct-view type is installed.

This video display apparatus 1703, together with a cushion 1701, constitutes a headrest 1702 of a front seat 1704 of a vehicle.

This video display apparatus 1703 equipped with an LCD is installed so that the LCD faces towards the rear of the vehicle, and the cushion 1701 is attached to the front surface of the video display apparatus 1703.

The fellow passenger who sits in the rear seat can view a video image displayed on the LCD of the video display apparatus 1703 by directly viewing the video.

On the other hand, the video display apparatus of projection type is generally called a projector, and there are two types of such projectors, for example, a projector including a built-in display element of a CRT and a projector including a display element of a LCD panel. As another type of projectors, DLP (a trademark of Texas Instrument Incorporated) projectors have recently been provided. This DLP projector includes, as the above-mentioned display element, a built-in digital micromirror device (DMD) that is an assembly of hinged microscopic mirrors. When light of a lamp is illuminated on this DMD, a picture source is formed on the display element depending on the light reflected from each mirror. That is to say, each mirror serves as a pixel of the picture source.

However, the above-mentioned conventional video display apparatus of direct-view type has a problem that a passenger who is a viewer sitting in the rear seat gets tired in long hours of viewing because the display size is relatively small and the video image is far from the viewer.

On the other hand, a video display apparatus of projection type such as a projector allows not only display of a video image at an arbitrary position in a vehicle but also projection of a relatively large video image. However, such apparatus has a problem that the viewer cannot view the video comfortably because vibrations tend to occur in the environment in which the apparatus is mounted in a vehicle and therefore the video image display position suffers from a large amount of displacement caused by difference of vibrations between the projector side and the display side.

The present invention has been conceived in view of these problems, and it is an object of the present invention to provide a video display system which achieves suppression of displacement of video image display position and improvement in viewing comfort.

### Disclosure of Invention

In order to achieve the above object, the video display system of the present invention is a video display system for displaying a video image, including: a video projection light outputting unit operable to output a video projection light for displaying a video image; an image receiving unit operable to display the video image by receiving the video projection light; a displacement deriving unit operable to detect a display position of the video image to be displayed on the image receiving unit, and to derive a displacement of the display position of the video image; and a video projection light controlling unit operable to control an output mode of the video projection light so as to suppress the displacement derived by the displacement deriving unit. For example, the video projection light controlling unit is operable to change a direction of the video projection light. The video projection light outputting unit is a projector which projects a video projection light in a predetermined direction, and the image receiving unit includes a display screen which receives the video projection light and displays the video image. Or, the video projection light outputting unit is operable to output the video projection light so as to be viewed directly, and the image receiving unit includes a reflecting mirror which reflects the video projection light so as to display the video image.

By doing so, even if vibration occurs in the present system and the display position of the video image to be displayed on the image receiving unit is changed due to the vibration, the displacement deriving unit derives the displacement of the display position and the video projection light controlling unit controls the output mode of the video projection light so as to suppress the displacement. Therefore, it becomes possible to suppress the variations in the video image display position and as a result, to improve the viewing comfort.

The displacement deriving unit may include an imaging unit operable to capture the video image to be displayed on the image receiving unit, and derive the displacement of the display position of the video image based on a result of the image capture by the imaging unit.

By doing so, the displacement deriving unit derives the displacement of the display position of the video image based on the result of the image capture. Therefore, it becomes possible to appropriately derive the displacement of the display position of the video image based on the variations of the relative positions between the projection light outputting unit and the image receiving unit.

The displacement deriving unit may include a light sensor which detects the video projection light received by the image receiving unit and outputs a light detection signal corresponding to a result of the detection, and derive the displacement of the display position of the video image based on a change in the light detection signal outputted from the light sensor. Also in this case, it is possible to appropriately derive the displacement in the video image display position based on the variations of the relative positions between the projection light outputting unit and the image receiving unit.

The video display system may further include a distortion detecting unit operable to detect a distortion in a video image to be displayed on the image receiving unit, and the video projection light controlling unit may further control an output mode of the video projection light so as to suppress the distortion in the video image detected by the distortion detecting unit. For example, the video projection light outputting unit is operable to generate the video projection light which represents a picture, based on a picture signal indicating details of the picture, the distortion detecting unit is operable to detect the distortion in the video image by detecting a distance between the video projection light outputting unit and each of at least three parts on an image receiving surface of the image receiving unit for receiving a video projection light, and the video projection light controlling unit is operable to change a shape of the picture indicated by the picture signal so as to suppress the distortion in the video image detected by the distortion detecting unit.

By doing so, even if the video image to be displayed on the image receiving unit is distorted because the user changes the orientation of the image receiving unit, the output mode of the video projection light is controlled so as to suppress the distortion. Therefore, it becomes possible for the user to view the undistorted video image so as to improve his/her viewing comfort.

It should be noted that the video display system of the present invention can be embodied as a method of displaying video images or as a program for displaying video images.

### Brief Description of Drawings

FIG. 1 is an illustration for describing a situation in which a video display apparatus of direct-view type is installed.
FIG. 2 is a structure diagram showing a structure of a video display system in a first embodiment of the present invention.
FIG. 3 is a perspective view of a part of an adjustment unit of the first embodiment.
FIG. 4 is an illustration for describing how a reflecting mirror of the adjustment unit is pivoted when vibration occurs in a projector of the first embodiment.
FIG. 5 is a flowchart showing a series of operations of the projector of the first embodiment.
FIG. 6 is a structure diagram showing a structure of the video display system in a first modification of the present embodiment.
FIG. 7 is a structure diagram showing a structure of a video display system in a second modification of the present embodiment.
FIG. 8 is a structure diagram showing a structure of the video display system in a second embodiment of the present invention.
FIG. 9 is a structure diagram showing one example of an internal structure of a light output unit of the second embodiment.
FIG. 10 is a flowchart showing a series of operations of the projector of the second embodiment.
FIG. 11 is a structure diagram showing a structure of a video display system in a third embodiment of the present invention.
FIG. 12 is an illustration for describing one example of the processing of a picture signal in the third embodiment.
FIG. 13 is a flowchart showing a series of operations of the projector of the present embodiment.
FIG. 14 is a structure diagram showing a structure of a video display system in a fourth embodiment of the present invention.
FIG. 15 is a front view of a projector body and a body mounting member of the fourth embodiment, which shows how the former is mounted on the latter.
FIG. 16 is an illustration for describing how the projector body is pivoted when vibration occurs in the projector of the fourth embodiment.
FIG. 17 is a flowchart showing a series of operations of the projector of the fourth embodiment.
FIG. 18 is an external view of a video display system in a fifth embodiment of the present invention, which shows an external structure thereof.
FIG. 19 is an internal view of the video display system in the fifth embodiment, which shows an internal structure thereof.
FIG. 20 is an illustration for describing light receiving ranges of first and second light detection units of the fifth embodiment.
FIG. 21 is a flowchart showing a series of operations of the video display system in the fifth embodiment.
FIG. 22 is an external view of a video display system in a sixth embodiment of the present invention, which shows an external structure thereof.
FIG. 23 is an internal view of a projector of the sixth embodiment, which shows an internal structure thereof.
FIG. 24 is an illustration for describing ranges of video images to be projected which are to be captured by first and second imaging units.
FIG. 25 is an external view of a video display system in a seventh embodiment of the present invention, which shows an external structure thereof.
FIG. 26 is an external view of a screen unit of the seventh embodiment, which shows an appearance thereof.
FIG. 27 is an external view of a projector of the seventh embodiment, which shows an appearance thereof.
FIG. 28 is a structure diagram showing structures of the screen unit and the projector of the seventh embodiment.
FIG. 29 is a flowchart showing the operation procedure of the screen unit of the seventh embodiment.
FIG. 30 is a flowchart showing the operation procedure of the projector of the seventh embodiment.
FIG. 31 is an illustration for describing how a video image (picture) is displayed without distortion by the light projected from the projector of the seventh embodiment.
FIG. 32 is an illustration for describing how a video image (picture) which is distorted due to the tilt of the image receiving surface of the seventh embodiment toward the azimuth direction is corrected.
FIG. 33 is an illustration for describing how a video image to be displayed is distorted by the tilt of the image receiving surface toward the azimuth and elevation directions thereof in the seventh embodiment.
FIG. 34 is an illustration for describing processing performed by a signal processing unit in the situation of the seventh embodiment shown in FIG. 33.
FIG. 35 is a structure diagram showing structures of a screen unit and a projector in a video display system according to a first modification of the seventh embodiment.
FIG. 36 is a structure diagram showing a structure of a projector in a second modification of the seventh embodiment.
FIG. 37 is a diagram showing a projection range of a video image projection unit of the projector of the second modification.
FIG. 38 is a structure diagram showing structures of a screen unit and a projector in a video display system in a third modification of the seventh embodiment.
FIG. 39 is a diagram showing an angle of view of an imaging device of the projector of the seventh embodiment.
FIG. 40 is an illustration for describing processing of a video display system including four light detection units for eliminating image deviation.

### Best Mode for Carrying Out the Invention

### (First Embodiment)

A description is given below, with reference to the diagrams, of a video display system in the first embodiment of the present invention.

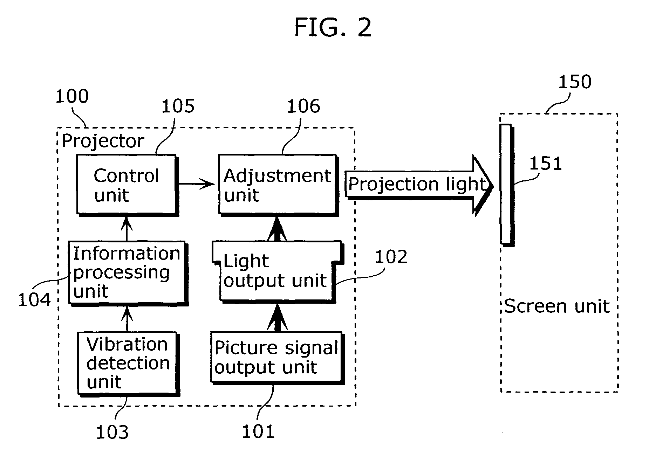

FIG. 2 is a structure diagram showing a structure of the video display system in the first embodiment of the present invention.

This video display system is designed for suppressing displacement of the video image display position and improving viewing comfort. The video display system is comprised of a projector 100 which projects a light (a video projection light) for displaying a video image, and a screen unit 150 which receives the projected light so as to display the video image thereon.

The projector 100 includes: a picture signal output unit 101 which outputs a picture signal indicating the details of a picture; a light output unit 102 which obtains the picture signal outputted from the picture signal output unit 101 and outputs the projection light corresponding to the picture signal; an adjustment unit 106 which adjusts the direction of the projection light outputted from the light output unit 102; a vibration detection unit 103 which detects the vibration of the projector 100 and outputs a detection signal; an information processing unit 104 which derives an amount of displacement indicating the amount and direction of the vibration of the projector 100 and creates and outputs displacement information indicating the amount of displacement; and a control unit 105 which obtains the displacement information and outputs a control signal corresponding to the displacement information so as to control the adjustment unit 106.

The screen unit 150 has an approximately flat surface, as an image receiving surface for receiving the projected light and for displaying video images.

The vibration detection unit 103 is comprised of, for example, a gyro sensor used for correcting blurring of images due to hand movements in a camera or a camcorder. Such a gyro sensor is a device for detecting an angular velocity using the phenomenon (called Coriolis force) that when an object which is vibrating in a fixed direction is rotated, a vibration occurs in a direction orthogonal to the vibration direction (See pages 496 to 503 of "Journal of the Acoustical Society of Japan", Vol. 55, No. 7 (1999)). The detection signal outputted from the vibration detection unit 103 is comprised of, for example, a voltage signal. Note that the vibration detection unit 103 may output an electrical signal other than the voltage signal as a detection signal, or may output an optical signal or a mechanical change as a detection signal.

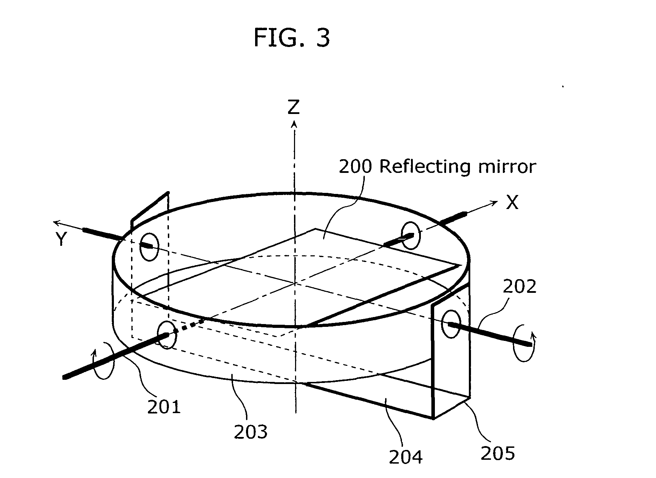

FIG. 3 is a perspective view of a part of the adjustment unit 106.

The adjustment unit 106 includes a reflecting mirror 200 which receives the light projected from the light output unit 102 and reflects it, a mounting member 205 mounted on the reflecting mirror so as to pivot the reflecting mirror 200 in an arbitrary direction, and a pivoting mechanism (not shown in this diagram) for pivoting the reflecting mirror 200 by applying force on the mounting member 205.

The reflecting mirror 200 is formed so as to have a shape of an approximately rectangular flat plate, as shown in FIG. 3.

The mounting member 205 includes an X rotation shaft 201 which is mounted in the reflecting mirror 200 along with the length direction (X-axis direction) of the reflecting mirror 200, a ring-shaped frame 203 which supports the X rotation shaft 201, a Y rotation shaft 202 which is mounted in the ring-shaped frame 203 along with the width direction (Y-axis direction) of the reflecting mirror 200, and a U-shaped supporting member 204 which supports the Y rotation shaft 202. Since the reflecting mirror 200 is mounted on such mounting member 205, if the X rotation shaft 201 is rotated around the X-axis, the reflecting mirror 200 is pivoted so that the reflecting surface of the reflecting mirror 200 faces toward an arbitrary direction on the Y-Z plane, while if the Y rotation shaft 202 is rotated around the Y-axis, the reflecting mirror 200 and the ring-shaped frame 203 are pivoted so that the reflecting surface of the reflecting mirror 200 faces toward an arbitrary direction on the X-Z plane.

The pivoting mechanism rotates the X rotation shaft 201 and the Y rotation shaft 202 in the directions indicated by the arrows in this diagram, for example, according to the control signal outputted from the control unit 105. As a result, the reflecting surface of the reflecting mirror 200 faces toward the direction according to the control signal outputted from the control unit 105, so the projection light outputted from the light output unit 102 and reflected by the reflecting mirror 200 is directed toward a predetermined direction.

This pivoting mechanism including an electromagnetic coil, for example, is structured so that the X rotation shaft 201 and the Y rotation shaft 202 are rotated by an arbitrary angle using electromagnetic force generated by applying the current to the electromagnetic coil. In other words, the pivoting mechanism has a structure for driving the pointer of a common meter, for example. The pivoting mechanism and the mounting member 205 are structured so that the reflecting mirror 200 is slightly pivoted.

When obtaining the displacement information from the information processing unit 104, the control unit 105 estimates the displacement in the position of the video image to be displayed on the screen unit 150, based on the amount of displacement of the projector 100 indicated by the displacement information, and outputs a control signal instructing the pivoting mechanism of the adjustment unit 106 to adjust the reflecting mirror 200 so as to face toward the direction for suppressing the displacement.

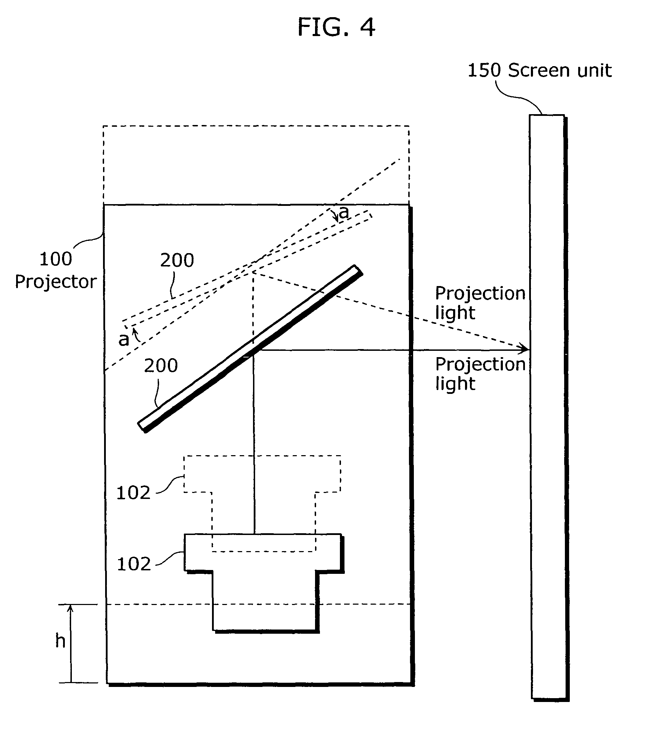

FIG. 4 is an illustration for describing how the reflecting mirror 200 of the adjustment unit 106 is pivoted when vibration occurs in the projector 100.

As shown in FIG. 4, the projection light outputted from the light output unit 102 is reflected by the reflecting mirror 200 of the adjustment unit 106 and illuminated to the screen unit 150.

Here, if the projector 100 is vibrated and moved from the position indicated by the solid line in FIG. 4 to the position indicated by the dotted line, namely, it moves upward by the distance h in FIG. 4, the video image to be displayed on the screen unit 150 also moves upward by the distance h in FIG. 4.

On the other hand, in the projector 100 of the present embodiment, the reflecting mirror 200 of the adjustment unit 106 is pivoted by an angle a toward the direction indicated by the arrows in FIG. 4 based on the result of the above vibration detected by the vibration detection unit 103, so it is possible to suppress the displacement in the position of the video image to be displayed on the screen unit 150.

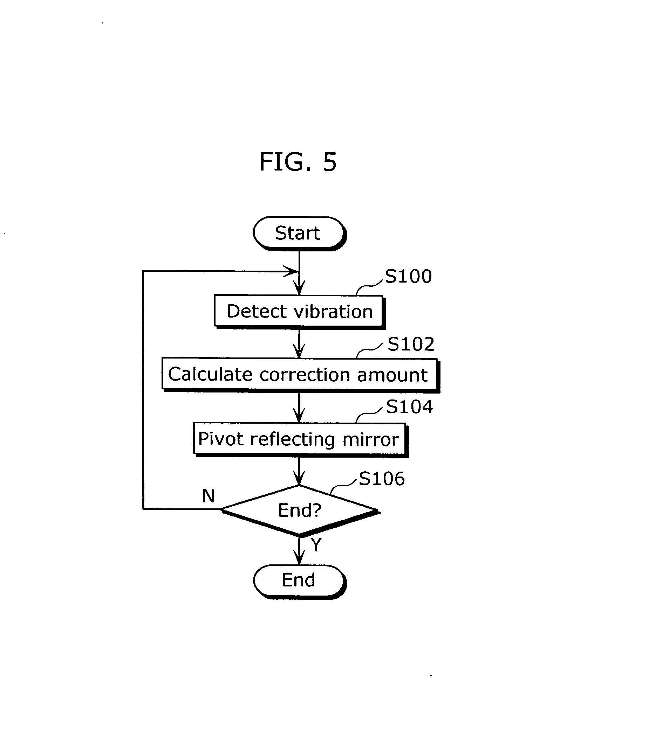

FIG. 5 is a flowchart showing a series of operations of the projector 100 in the video display system according to the present embodiment.

First, the projector 100 detects the vibration which occurs in itself (Step S100). Then, the projector 100 estimates the displacement in the video image position on the screen unit 150 based on the detection result, and calculates, as a correction amount, the pivoting direction and angle of the reflecting mirror 200 for suppressing the displacement (Step S102). Next, the projector 100 pivots the reflecting mirror 200 by the correction amount (Step S104). Here, the projector 100 judges whether or not it is instructed to end the above-mentioned operations (Step S106). The projector 100 ends the operations when it judges that it is instructed to end the operations (Y in Step S106), whereas it repeatedly executes these operations from Step S100 to Step S106 when it judges that it is not instructed to end the operations (N in Step S106).

As described above, according to the present embodiment, even if the projector is vibrated, the displacement of the display position of the video image to be displayed on the screen unit 150 is estimated based on the vibration result, and the reflecting mirror 200 of the adjustment unit 106 is pivoted so as to suppress the displacement and then the output direction of the projection light is changed. Accordingly, it is possible to suppress the variations in the display position, and therefore to improve viewing comfort.

It should be noted that the adjustment unit 106 of the present embodiment is comprised of the reflecting mirror 200, the mounting member 205 and others. However, this structure is just an example, and any other structure can be applied if only the projection light can be directed toward an arbitrary direction.

It should also be noted that the projector 100 of the present embodiment includes the adjustment unit 106, but the adjustment unit 106 may be provided outside the projector 100.

### (First Modification)

Next, a description is given of a first modification of the video display system in the above embodiment.

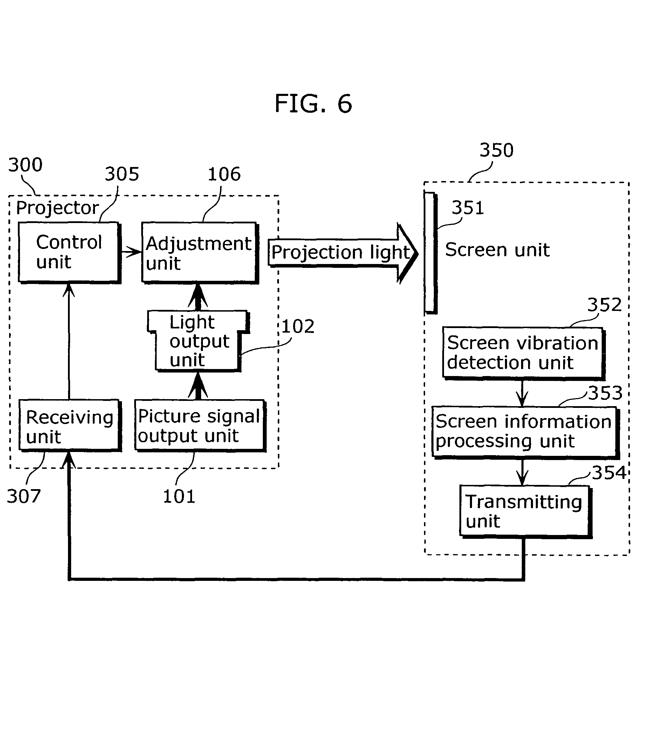

FIG. 6 is a structure diagram showing the structure of the video display system of the first modification of the present embodiment.

This video display system of the first modification is comprised of a projector 300 which projects light for displaying video images and a screen unit 350 which receives the projected light and displays the video images, and it is characterized in that it detects the vibration of the screen unit 350.

The screen unit 350 has an approximately flat surface, as an image receiving surface 351 for receiving projected light and displaying video images. It also includes a screen vibration detection unit 352 which detects a vibration of the screen unit 350 and outputs a detection signal, a screen information processing unit 353 which derives an amount of displacement indicating the amount and direction of the displacement of the screen unit 350 and creates and outputs screen displacement information indicating the displacement amount, and a transmitting unit 354 which transmits the screen displacement information to the projector 300.

Here, the screen vibration detection unit 352 and the screen information processing unit 353 have the same structures and functions as those of the vibration detection unit 103 and the information processing unit 104 in the above embodiment.

The projector 300 includes, in addition to the above-mentioned picture signal output unit 101, the light output unit 102 and the adjustment unit 106, a receiving unit 307 which receives the screen displacement information transmitted from the screen unit 350 and a control unit 305 which controls the adjustment unit 106 by obtaining the screen displacement information and outputting a control signal corresponding to the screen displacement information to the adjustment unit 106.

When obtaining the screen displacement information from the screen unit 350 via the receiving unit 307, the control unit 305 of the projector 300 estimates the displacement in the position of the video image to be displayed on the screen unit 350, based on the displacement amount of the screen unit 350 indicated in the screen displacement information, and calculates, as a correction amount, the pivoting direction and angle of the reflecting mirror 200 so as to suppress the displacement. Then, the control unit 305 outputs a control signal instructing the pivoting mechanism of the adjustment unit 106 so as to pivot the reflecting mirror 200 by the correction amount. The pivoting mechanism of the adjustment unit 106 rotates the X rotation shaft 201 and the Y rotation shaft 202 based on the control signal so as to pivot the reflecting mirror 200 by the correction amount instructed by the control unit 305.

As described above, in the first modification, even if the screen unit 350 is vibrated, the displacement of the display position of the video image to be displayed on the screen unit 350 is estimated based on the vibration result, and the reflecting mirror of the adjustment unit 106 is pivoted so as to suppress the displacement and thus the output direction of the projection light is changed. Therefore, it becomes possible to suppress the variations of the display position.

The present modification has an effect particularly for the case where the projector 300 is hardly vibrated while the screen unit 350 is easily vibrated, such as the case where the projector 300 is placed in a place where vibration hardly occurs, and the case where vibration is hardly transmitted to the projector 300 using a mechanism like a suspension.

It should be noted that the present modification includes the adjustment unit 106 as described in the above embodiment, but the above-mentioned structure of the adjustment unit 106 is just an example and the adjustment unit 106 may have any other structure if only it allows light to be projected toward an arbitrary direction.

Furthermore, the projector 300 of the present embodiment includes the adjustment unit 106, but the adjustment unit 106 may be placed outside the projector 300.

### (Second Modification)

Next, a description is given below of the second modification of the video display system in the above embodiment.

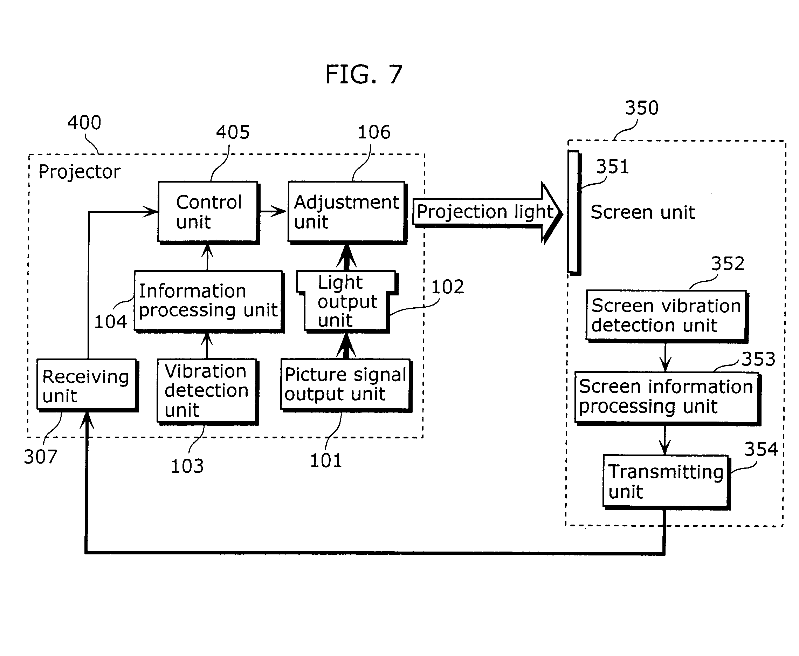

FIG. 7 is a structure diagram showing a structure of a video display system in the second modification of the present embodiment.

This video display system of the second modification is characterized in that it is comprised of a projector 400 which projects light for displaying video images and the screen unit 350 of the above first modification, and it detects the vibrations of the projector 400 and the screen unit 350.

The screen unit 350 includes the image receiving surface 351 as well as the screen vibration detection unit 352, the screen information processing unit 353 and the transmitting unit 354, as is the case with the first modification, and the transmitting unit 354 transmits the screen displacement information created by the screen information processing unit 353 to the projector 400.

The projector 400 includes the picture signal output unit 101, the light output unit 102, the adjustment unit 106, the information processing unit 104 and the vibration detection unit 103, as is the case with the above embodiment. The projector 400 further includes the receiving unit 307 which receives the screen displacement information outputted from the screen unit 350, and a control unit 405 which controls the adjustment unit 106 by outputting, to the adjustment unit 106, a control signal which corresponds to both the screen displacement information received by the receiving unit 307 and the displacement information outputted from the information processing unit 104.

When obtaining the screen displacement information and the displacement information, the control unit 405 of the projector 400 calculates, based on the displacement amounts indicated by respective information, the relative displacement amount indicating the moving direction, the moving distance and the like of the relative position between the projector 400 and the screen unit 350, and estimates, based on the relative displacement amount, the displacement of the position of the video image to be displayed on the screen unit 350. Then, the control unit 405 calculates, as a correction amount, the pivoting direction and angle of the reflecting mirror 200 so as to suppress the displacement, and outputs a control signal instructing the adjustment unit 106 to pivot the reflecting mirror 200 by the correction amount. The pivoting mechanism of the adjustment unit 106 rotates the X rotation shaft 201 and the Y rotation shaft 202 based on the control signal so as to pivot the reflecting mirror 200 by the correction amount instructed by the control unit 405.

As described above, in the second modification, even if the projector 400 and the screen unit 350 are vibrated, the displacement of the display position of the video image to be displayed on the screen unit 350 is estimated based on this relative displacement result, and the reflecting mirror of the adjustment unit 106 is pivoted so as to suppress the displacement and thus the output direction of the projected light is changed. Therefore, it becomes possible to further suppress the variations of the display position.

It should be noted that the present modification includes the adjustment unit 106 as described in the above embodiment, but the above-mentioned structure of the adjustment unit 106 is just an example and the adjustment unit 106 may have any other structure if only it allows light to be projected toward an arbitrary direction.

Furthermore, the projector 400 of the present modification includes the adjustment unit 106, but the adjustment unit 106 may be placed outside the projector 400.

### (Second Embodiment)

A description is given below, with reference to the diagrams, of a video display system in the second embodiment of the present invention.

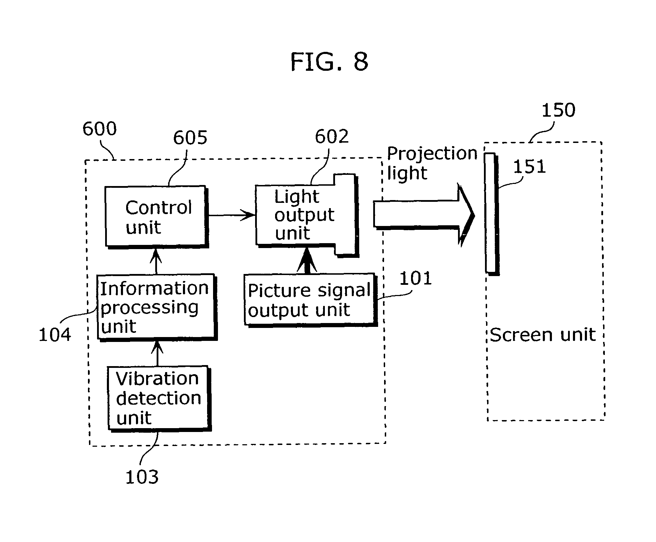

FIG. 8 is a structure diagram showing a structure of the video display system in the second embodiment of the present invention.

This video display system is designed for suppressing displacement of the video image display position and improving viewing comfort. The video display system is comprised of a projector 600 which projects a video projection light for displaying video images, and a screen unit 150 of the first embodiment which receives the projected light so as to display the video images.

The projector 600 includes, as is the case with the first embodiment: the picture signal output unit 101; the vibration detection unit 103 which detects the vibration of the projector 600 and outputs a detection signal; and the information processing unit 104 which derives, based on the detection signal outputted from the vibration detection unit 103, the amount of displacement indicating the amount and direction of the vibration of the projector 600 and creates and outputs displacement information indicating the amount of displacement. The projector 600 further includes a light output unit 602 which obtains the picture signal outputted from the picture signal output unit 101 and outputs a projection light corresponding to the picture signal, and a control unit 605 which controls the light output unit 602 by obtaining the displacement information from the information processing unit 104 and outputting a control signal corresponding to the displacement information to the light output unit 602.

The present embodiment as described above is characterized in that the light output unit 602 changes the position from which the projection light is to be emitted, according to the control signal outputted from the control unit 605.

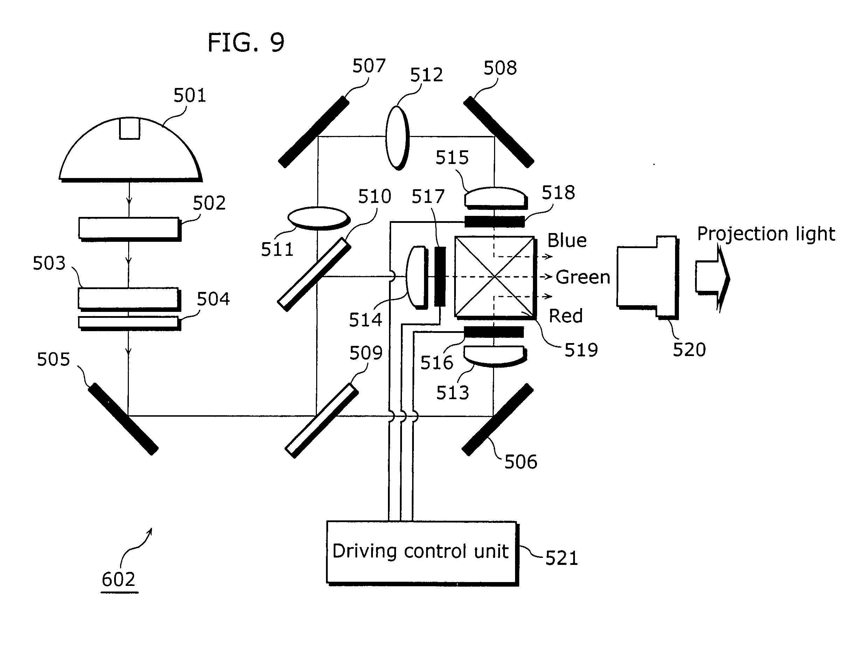

FIG. 9 is a structure diagram showing one example of an internal structure of the light output unit 602 in the present embodiment.

The light output unit 602 includes a light source 501, first and second integrator lenses 502 and 503, a polarization element 504, first to fourth mirrors 505 to 508, first and second dichroic mirrors 509 and 510, first and second relay lenses 511 and 512, first to third condenser lenses 513 to 515, first to third LCD panel 516 to 518, a dichroic prism 519, a projecting lens 520, and a driving control unit 521.

The light source 501 outputs white light toward the first integrator lens 502.

The first and second integrator lenses 502 and 503 separates and integrates the light outputted from the light source 501 so as to make the light uniform.

The polarization element 504 adjusts the directions of lights which have passed through the first and second integrator lenses 502 and 503 in a specific direction.

The first and second dichroic mirrors 509 and 510 allow lights of a predetermined range of wavelengths to pass through while they reflect the lights of other wavelengths.

The first dichroic mirror 509 receives the white light reflected by the first mirror 505, via the polarization element 504, and allows only the red light included in the white light to pass through and reflects the other light. The red light passed through the first dichroic mirror 509 is reflected by the second mirror 506 and illuminated to the first condenser lens 513. The second dichroic mirror 510 receives the light reflected by the first dichroic mirror 509, and allows only the blue light included in the white light to pass through and reflects the other light, namely, green light. Then, the green light reflected by the second dichroic mirror 510 is illuminated to the second condenser lens 514, while the blue light which has passed through the second dichroic mirror 510 is illuminated to the third condenser lens 515 via the first relay lens 511, the third mirror 507, the second relay lens 512 and the fourth mirror 508.

The first and second relay lenses 511 and 512 adjust the blue light so that the blue light illuminated from the first dichroic mirror 509 to the third condenser lens 515 has a condition which is optically equivalent to the conditions of the red light and green light illuminated from the first dichroic mirror 509 respectively to the first and second condenser lenses 513 and 514. In other words, the first and second relay lenses 511 and 512 eliminate the differences in the conditions of the lights respectively illuminated to the condenser lenses 513, 514 and 515, which are created from the differences between the optical path length of the blue light and the respective optical path lengths of the red light and the green light.

The first condenser lens 513 receives the red light and illuminates that light telecentrically and homogeneously, to the first LCD panel 516, as a light beam whose principal ray is parallel to the optical axis to infinity.

In the same manner, the second condenser lens 514 receives the green light and illuminates that light telecentrically and homogeneously to the second LCD panel 517, and the third condenser lens 515 receives the blue light and illuminates that light telecentrically and homogeneously to the third LCD panel 518.

The first to third LCD panels 516 to 518 make the transmittance of light of each pixel variable depending on the picture signal outputted from the picture signal output unit 101. Each of these LCD panels 516 to 518 is equipped with polarization plates at the light incident side and the light emitting side of itself, so only the light emitted from a predetermined direction is allowed to enter each of the LCD panels 516 to 518, modulated per pixel, and emitted as a projection light from each LCD panel 516 to 518. Therefore, the first LCD panel 516 illuminates the light indicating a red image to the dichroic prism 519, the second LCD panel 517 illuminates the light indicating a green image to the dichroic prism 519, and the third LCD panel 518 illuminates the light indicating a blue image to the dichroic prism 519.

The dichroic prism 519 generates the projection light of mixed color by integrating the lights projected from the respective LCD panels 516 to 518 along the same axis, and emits it to the projecting lens 520.

The projecting lens 520 magnifies the emitted projection light and outputs it to the screen unit 150.

The driving control unit 521 moves the first to third LCD panels 516 to 518 toward the direction approximately perpendicular to the optical axis, according to the control signal outputted from the control unit 605. This varies the light emitting position in the dichroic prism 519 and the projecting lens 520, from which the projection light is to be outputted.

On the other hand, when the control unit 605 obtains the displacement information from the information processing unit 104, it estimates the displacement of the position of the video image to be displayed on the screen unit 150, based on the displacement amount of the projector 600 indicated by that displacement information, calculates, as a correction amount for suppressing the displacement, the moving direction and the moving distance of each of the LCD panels 516 to 518 of the light output unit 602, and outputs a control signal instructing the above-mentioned driving control unit 521 of the light output unit 602 to move each of the LCD panels 516 to 518 by the correction amount.

For example, when the projector 600 is vibrated and displaced toward the perpendicularly lower direction by a predetermined distance, the control unit 605 outputs a control signal corresponding to the displacement to the light output unit 602. Therefore, the first to third LCD panels 516 to 518 of the light output unit 602 are moved according to the control signal, and the position in the projecting lens 510, from which the light is to be emitted, is moved toward the perpendicularly upper direction by the above predetermined distance.

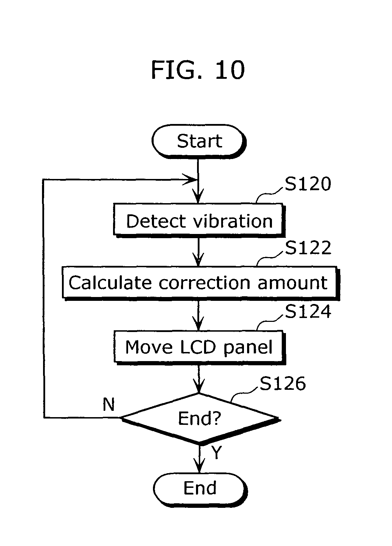

FIG. 10 is a flowchart showing a series of operations of the projector 600 of the video display system in the present embodiment.

First, the projector 600 detects the vibration which occurs in itself (Step S120). Then, the projector 600 estimates the displacement of the position of the video image to be displayed on the screen unit 150, based on the detection result, and calculates, as correction amounts for suppressing the displacement, the moving directions and the moving distances of the first to third LCD panels 516 to 518 (Step S122). Next, the projector 600 moves the first to third LCD panels 516 to 518 by the correction amounts (Step S124). Here, the projector 600 judges whether or not it is instructed to end the above operations (Step S126), and it ends the above operations when it judges that it is instructed to end the operations (Y in Step S126), while it repeatedly executes the operations from Step S120 through Step 126 when it judges that it is not instructed to end the operations (N in Step S126).

As described above, in the present embodiment, even if the projector 600 is vibrated, the displacement of the position of the video image to be displayed on the screen unit 150 is estimated based on the vibration result, and the first to third LCD panels 516 to 518 of the light output unit 602 are moved so as to suppress the displacement and thus the output position of the projection light is changed. Therefore, it becomes possible to suppress the variations in the display position.

It should be noted that in the present embodiment, the output position of the projection light is changed by moving only the first to third LCD panels of the light output unit 602, but the output position of the projection light may be changed by moving the other optical constituent elements.

Additionally, in the present embodiment, the projector 600 is structured as a so-called three-panel LCD projector equipped with three LCD panels as shown in FIG. 9, but the present invention is not limited to such structure, and the projector 600 may have another structure if only it allows the output position of the projection light to be variable. For example, the projector 600 may be structured as a so-called single panel LCD projector or a reflective LCD projector. Also, the projector 600 may be structured as a projector of a system other than LCD, for example, DLP (a trademark of Texas Instrument Incorporated) system. In this case, the output position of the projection light is changed by moving DMD (Digital Micromirror Device).

Furthermore, in the present embodiment, the displacement of the display position of a video image to be displayed on the screen unit 150 is estimated based only on the vibration result of the projector 600. However, as is the case with the first and second modifications of the first embodiment, the screen unit 150 may include a vibration detection unit so as to estimate the displacement of the display position of the video image based on its vibration result. Or, the projector 600 and the screen unit 150 may respectively include the vibration detection units so as to estimate the displacement of the display position of the video image based on the vibration results of both the projector and the screen unit.

### (Third Embodiment)

A description is given below, with reference to the diagrams, of a video display system in the third embodiment of the present invention.

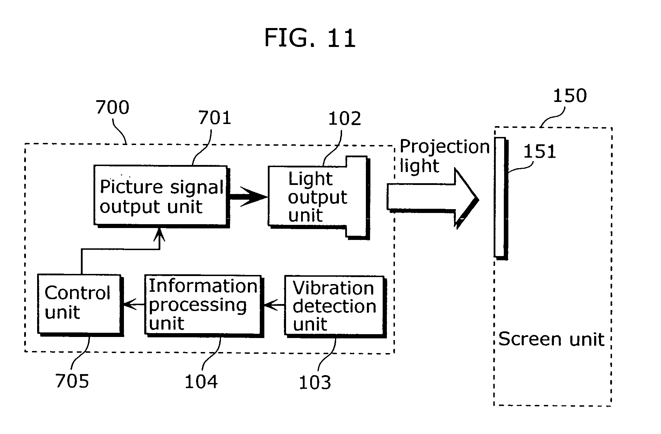

FIG. 11 is a structure diagram showing a structure of the video display system in the third embodiment of the present invention.

This video display system is designed for suppressing displacement of the video image display position and improving viewing comfort. The video display system is comprised of a projector 700 which projects a light for displaying video images, and the screen unit 150 of the first embodiment which receives the projected light so as to display the video images.

The projector 700 includes, as is the case with the first embodiment, the vibration detection unit 103 which detects the vibration of the projector 600 and outputs a detection signal; and the information processing unit 104 which derives, based on the detection signal outputted from the vibration detection unit 103, the amount of displacement indicating the amount and direction of the vibration of the projector 700, and creates and outputs displacement information indicating the amount of displacement. The projector 700 further includes a picture signal output unit 701 which outputs a picture signal indicating the details of a picture, and a control unit 705 which controls the picture signal output unit 701 by obtaining the displacement information from the information processing unit 104 and outputting a control signal corresponding to the displacement information to the picture signal output unit 701.

The present embodiment as described above is characterized in that the picture signal output unit 701 moves the picture position indicated by the picture signal by performing signal processing of the picture signal according to the control signal outputted from the control unit 705.

In other words, when the control unit 705 of the present embodiment obtains the displacement information from the information processing unit 104, it estimates the displacement of the video image position to be displayed on the screen unit 150, based on the displacement amount indicated by the displacement information, calculates, as a correction amount for suppressing the displacement, the moving direction and the moving distance of the picture, and outputs a control signal instructing the picture signal output unit 701 to move the picture by the correction amount. Then, when obtaining the control signal, the picture signal output unit 701 executes, on a picture signal to be outputted, coordinate transformation processing for moving the picture indicated by the picture signal by the correction amount indicated by the above control signal.

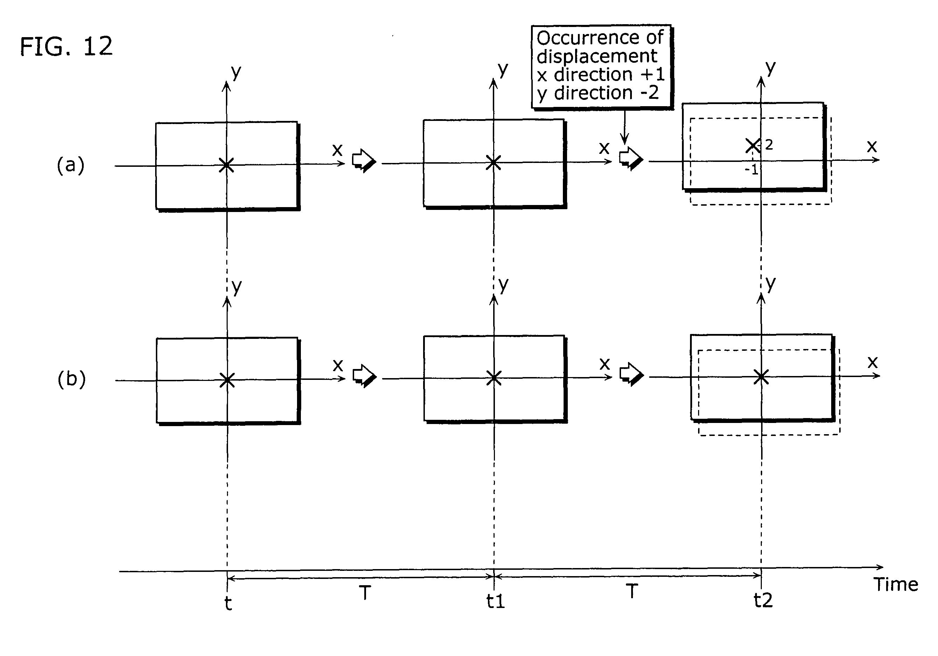

FIG. 12 is an illustration for describing one example of the processing of a picture signal in the present embodiment.

Here, FIG. 12(a) shows the position of the picture (frame) indicated by the picture signal outputted from the picture signal output unit 701, and FIG. 12(b) shows the position of the video image to be displayed on the screen unit 150. Note that the mark "x" in this diagram shows the center of each frame and each video image.

Here, a picture signal is normally formed as an output of a time series of signals each indicating a frame that is a single picture. For example, a signal indicating a frame is outputted at predetermined intervals (every time period T).

As shown in FIG. 12(a), at the time t1 after a time period T from the time t, there is no vibration in the projector 700, so the picture signal output unit 701 outputs a signal indicating each frame in the picture signal without performing coordinate transformation processing of the signal. As a result, as shown in FIG. 12(b), there is no change in the position of the video image to be displayed on the screen unit 150 during a period from the time t to the time t1.

Here, if a vibration occurs in the projector 700 during a period from the time t1 to the time t2 after a time period T from the time t1 and the control unit 705 obtains, from the information processing unit 104, the displacement information indicating the displacement amount of "+1 in the x direction and -2 in the y direction", the control unit 705 outputs a control signal instructing the picture signal output unit 701 to move the frame of the time t2 by "-1 in the x direction and +2 in the y direction".

Accordingly, the picture signal output unit 701 performs coordinate transformation processing corresponding to the control signal on the signal indicating the frame of the time t2, and as a result, the frame of the time t2 is moved from the position indicated in dotted lines to the position indicated in solid lines in FIG. 12(a).

The position of the video image to be displayed on the screen unit 150 is kept in the position indicated in solid lines at both the times t1 and t2, although it would be displaced to the position indicated in dotted lines according to the vibration of the projector 700 if the coordinate transformation processing is not performed.

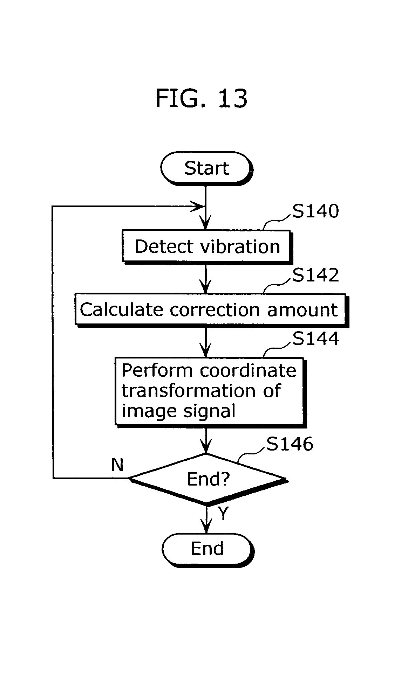

FIG. 13 is a flowchart showing a series of operations of the projector 700 in the video display system of the present embodiment.

First, the projector 700 detects the vibration which occurs in itself (Step S140). Then, the projector 700 estimates the displacement of the position of the video image to be displayed on the screen unit 150, according to the detection result, and calculates, as a correction amount for suppressing the displacement, the moving direction and the moving distance of the frame in the picture signal (Step S142). Next, the projector 700 executes the coordinate transformation processing on the signal indicating that frame in the picture signal by the correction amount (Step S144). Here, the projector 700 judges whether or not it is instructed to end the above operations (Step S146), and it ends the above operations when it judges that it is instructed to end the operations (Y in Step S146), while it repeatedly executes the operations from Step S140 through Step 146 when it judges that it is not instructed to end the operations (N in Step S146).

As described above, in the present embodiment, even if the projector 700 is vibrated, the displacement of the display position of the video image to be displayed on the screen unit 150 is estimated based on the vibration result, and the coordinate of each pixel in the picture signal is transformed so as to suppress the displacement and thus the output position of the projection light is changed. Therefore, it becomes possible to suppress the variations in the display position.

It should be noted that in the present embodiment, the displacement of the display position of the video image to be displayed on the screen unit 150 is estimated based only on the vibration result of the projector 700. However, as shown in the first and second modifications of the first embodiment, the screen unit 150 may include a vibration detection unit so as to estimate the displacement of the display position of the video image based on its vibration result. Or, the projector 700 and the screen unit 150 may respectively include the vibration detection units so as to estimate the displacement of the display position of the video image based on the vibration results of both the projector and the screen unit.

### (Fourth Embodiment)

A description is given below, with reference to the diagrams, of a video display system in the fourth embodiment of the present invention.

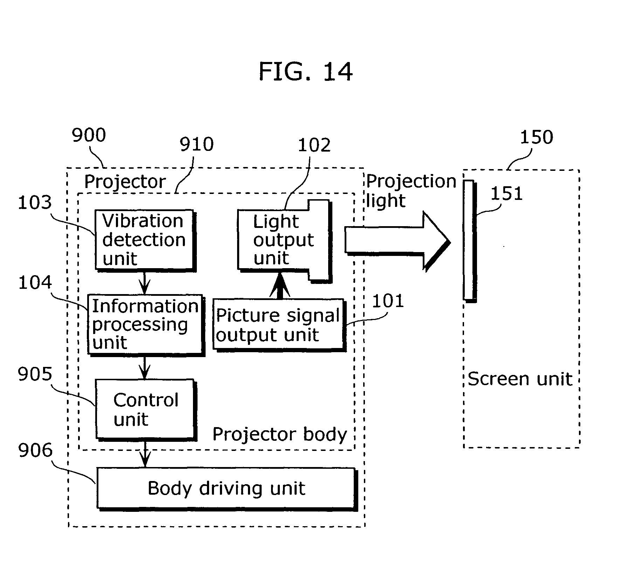

FIG. 14 is a structure diagram showing a structure of the video display system in the fourth embodiment of the present invention.

This video display system is designed for suppressing displacement of the video image display position and improving viewing comfort. The video display system is comprised of a projector 900 which projects a light for displaying video images, and the screen unit 150 of the first embodiment which receives the projected light so as to display the video images.

The projector 900 is comprised of a projector body 910 which projects the projection light and a body driving unit 906 which pivots the projector body 910.

The projector body 910 includes, as is the case with the first embodiment, the picture signal output unit 101, the light output unit 102, the vibration detection unit 103 which detects the vibration in the projector body 901 and outputs a detection signal, and the information processing unit 104 which derives, based on the detection signal outputted from the vibration detection unit 103, the amount of displacement indicating the amount and direction of the vibration of the projector body 910, and creates and outputs displacement information indicating the amount of displacement. The projector body 910 further includes a control unit 905 which controls the body driving unit 906 by obtaining the displacement information from the information processing unit 104 and outputting a control signal corresponding to the displacement information to the body driving unit 906.

The present embodiment as described above is characterized in that the body driving unit 906 pivots the projector body 910 according to the control signal outputted from the control unit 905 so as to change the output direction of the projection light.

The body driving unit 906 is equipped with a body mounting member mounted on the projector body 910 for pivoting the projector body 901 in an arbitrary direction, and a body pivoting mechanism for pivoting the projector body 910 by applying force to the body mounting member.

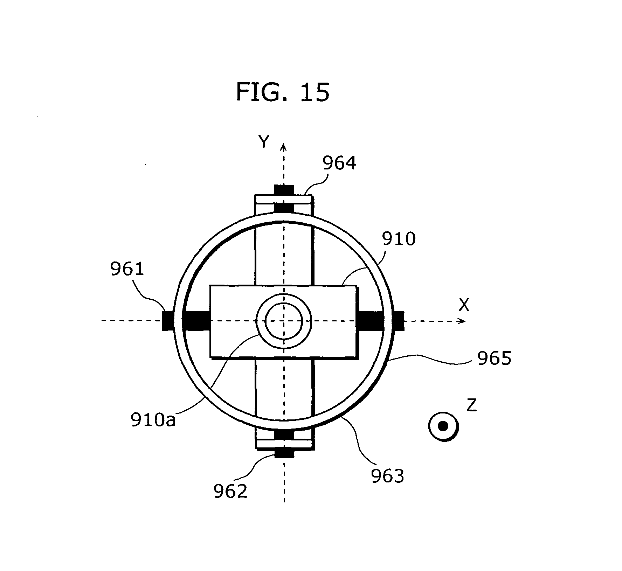

FIG. 15 is a front view of the projector body 910 and the body mounting member, which shows how the former is mounted on the latter.

The body mounting member 965 includes an X rotation shaft 961 mounted on the projector body 910 along the X axis direction shown in FIG. 15, a ring-shaped frame 963 which supports the X rotation shaft 961, a Y rotation shaft 962 mounted on the ring-shaped frame 963 along the Y axis direction shown in FIG. 15, and a U-shaped supporting member which supports the Y rotation shaft 962. The projector body 910 is mounted on the X rotation shaft 961 so that the output window 910a for outputting the projection light is pointed toward the direction approximately perpendicular to the axis direction of the X rotation shaft 961.

Since the projector body 910 is mounted on the above-mentioned body mounting member 965, the projector body 910 is pivoted by rotating the X rotation shaft 961 along itself, and therefore the output window 910a of the projector body 910 can be pointed toward an arbitrary direction on the YZ plane. The projector 910 and the ring-shaped frame 963 are pivoted by rotating the Y rotation shaft 962 along itself, and therefore the output window 910a of the projector body 910 can be pointed toward an arbitrary direction on the XZ plane.

The pivoting mechanism rotates the X rotation shaft and the Y rotation shaft according to the control signal outputted from the control unit 905. Therefore, the output window 910a of the projector body 910 is pointed toward the direction corresponding to the control signal outputted from the control unit 905 and the projection light is outputted toward that direction. Additionally, this pivoting mechanism is equipped with an electromagnetic coil, and is structured so as to rotate the X rotation shaft 961 and the Y rotation shaft 962 by an arbitrary angle using electromagnetic force which is generated by applying the current on the electromagnetic coil.

On the other hand, when the control unit 905 obtains the displacement information from the information processing unit 104, it estimates, based on the displacement amount of the projector 900 indicated by the displacement information, the displacement of the position of the video image to be displayed on the screen unit 150, calculates, as a correction amount for suppressing the displacement, the pivoting direction and the pivoting angle of the projector body 910, and outputs a control signal instructing the body driving unit 906 to pivot the projector body 910 by the correction amount.

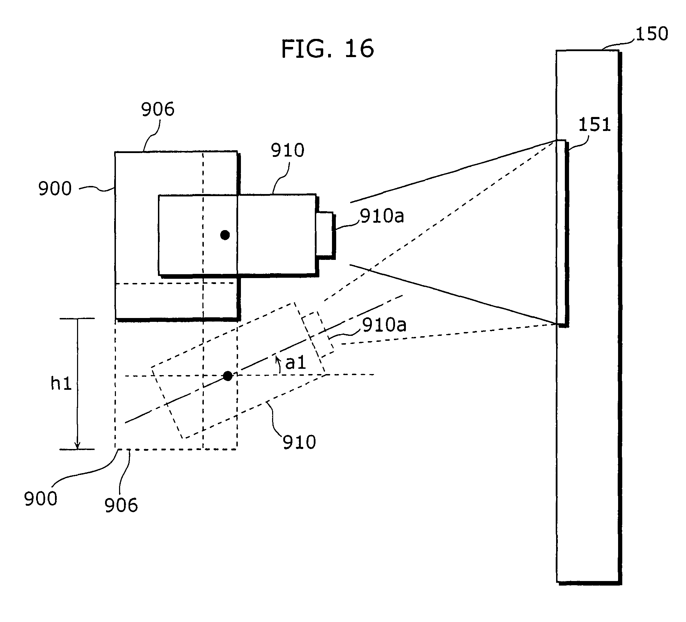

FIG. 16 is an illustration for describing how the projector body 910 is pivoted when a vibration occurs in the projector 900.

When a vibration occurs in the projector 900 and the projector 900 is moved from the position indicated in solid lines to the position indicated in dotted lines in FIG. 16, namely, it moves downward by a distance h1 in FIG. 16, the video image to be displayed on the screen unit 150 would also move downward in FIG. 16 by the distance h1.

However, according to the projector 900 of the present embodiment, the body driving unit 906 pivots the projector body 910 toward the direction indicated by the arrow in FIG. 16 by an angle a1, under the control of the control unit 905, based on the above vibration detected by the vibration detection unit 103, so it becomes possible to suppress the displacement of the position of the video image to be displayed on the screen unit 150.

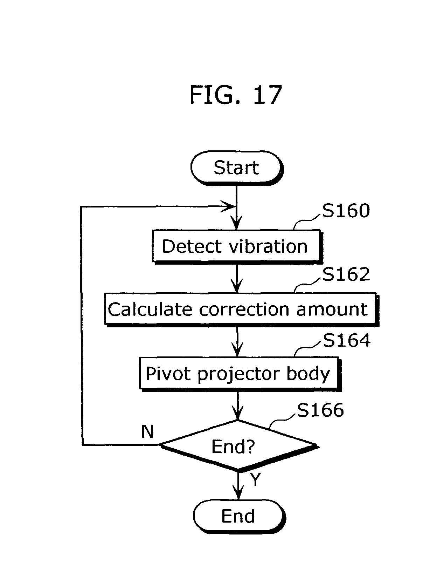

FIG. 17 is a flowchart showing a series of operations of the projector 900 in the video display system of the present embodiment.

First, the projector 900 detects the vibration which occurs in itself (Step S160). Then, the projector 900 estimates the displacement of the position of the video image to be displayed on the screen unit 150, according to the detection result, and calculates, as a correction amount for suppressing the displacement, the pivoting direction and the pivoting distance of the projector body 910 (Step S162). Next, the projector 900 pivots the projector body 910 by the correction amount (Step S164). Here, the projector 900 judges whether or not it is instructed to end the above operations (Step S166), and it ends the above operations when it judges that it is instructed to end the operations (Y in Step S166), while it repeatedly executes the operations from Step S160 through Step 166 when it judges that it is not instructed to end the operations (N in Step S146).

As described above, in the present embodiment, even if the projector 900 is vibrated, the displacement of the display position of the video image to be displayed on the screen unit 150 is estimated based on the vibration result, and the projector body 910 is pivoted so as to suppress the displacement and thus the output direction of the projection light is changed. Therefore, it becomes possible to suppress the variations in the video image display position on the screen unit 150.

It should be noted that the projector body 910 is pivoted in the present embodiment, but the present invention is not limited to it. Only the light output unit 102 or a part of the projector body 910 including the light output unit 102 may be pivoted.

Furthermore, in the present embodiment, the displacement of the display position of the video image to be displayed on the screen unit 150 is estimated based only on the vibration result of the projector 900. However, as is the case with the first and second modifications of the first embodiment, the screen unit 150 may include a vibration detection unit so as to estimate the displacement of the display position of the video image based on the vibration result. Or, the projector 900 and the screen unit 150 may respectively include the vibration detection units so as to estimate the displacement of the display position of the video image based on the vibration results of both the projector and the screen unit.

### (Fifth Embodiment)

Next, a description is given below of a video display system of the fifth embodiment.

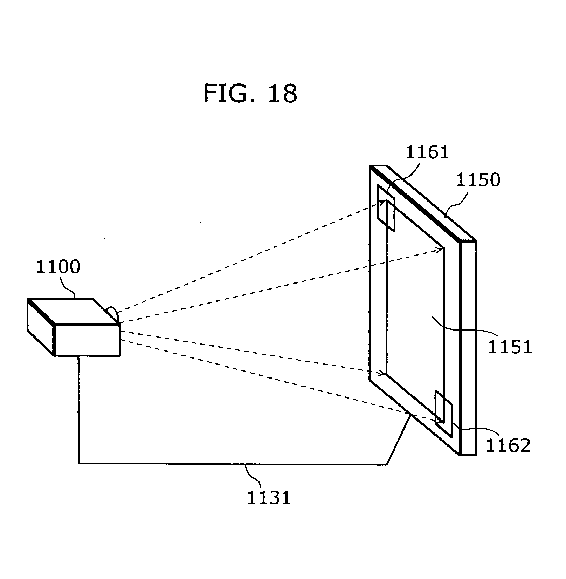

FIG. 18 is an external view of the video display system of the fifth embodiment, which shows the external structure thereof.

This video display system is designed for suppressing variations in the video image display position and improving viewing comfort. The video display system is comprised of a projector 1100 which projects a light for displaying video images, and a screen unit 1150 which receives the projected light so as to display the video images. The projector 1100 and the screen unit 1150 are connected via a wired or wireless communication medium 1131.

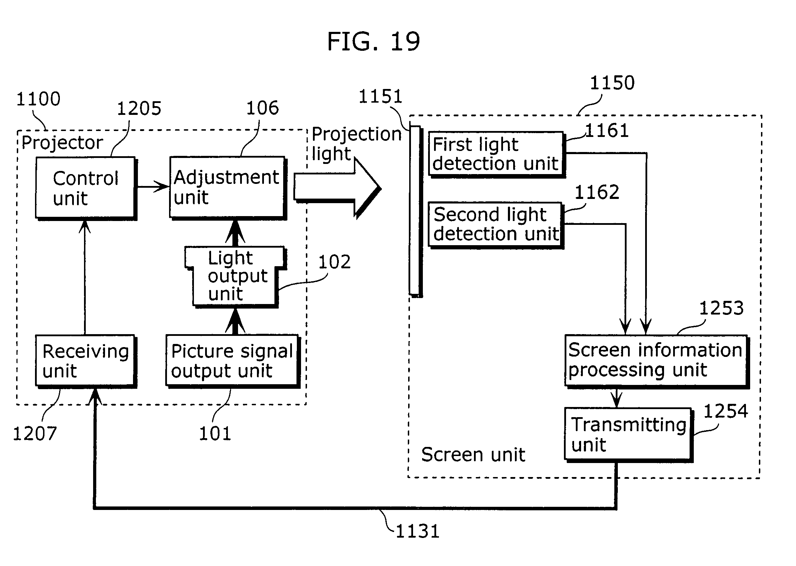

FIG. 19 is an internal view of the video display system in the present embodiment, which shows the internal structure thereof.

The screen unit 1150 has an approximately flat surface, as an image receiving surface 1151 for receiving projected light and projecting video images. It also includes first and second light detection units 1161 and 1162 which detect the light projected on the screen unit 1150 and outputs light detection signals, a screen information processing unit 1253 which derives the displacement of the display position of the video image to be displayed on the screen unit 1150, based on the light detection signals outputted from the first and second light detection units 1161 and 1162, and creates and outputs video displacement information indicating the derived displacement, and a transmitting unit 1254 which transmits the video displacement information to the projector 1100 via the communication medium 1131.

The projector body 1110 includes, as is the case with the first embodiment, the picture signal output unit 101, the light output unit 102 and the adjustment unit 106. The projector 1100 further includes the receiving unit 307 which receives the video displacement information outputted from the screen unit 1150 via the communication medium 1131, and a control unit 1205 which controls the adjustment unit 106 by obtaining the video displacement information and outputting a control signal corresponding to the video displacement information to the adjustment unit 106.

The present embodiment as described above is characterized in that the displacement of the video image is directly derived by detecting the light displayed on the screen unit 1150 and the direction of the projection light is adjusted so as to suppress the displacement, differently from the first to fourth embodiments in which the vibration of the projector or the screen unit is detected. In other words, in the present embodiment, the display position of the video image to be displayed on the screen unit 1150 is detected, the displacement of the video image display position is derived, and the displacement is suppressed.

Each of the first and second light detection unit 1161 and 1162 is comprised of a CCD or a CMOS sensor used for a digital video camera, for example, which detects a projected light and outputs a light detection signal comprised of an electrical signal corresponding to the detection result.

These first and second light detection units 1161 and 1162 are placed at two positions along the diagonal line on the image receiving surface 1151 of the screen unit 1150 so that a part of the light receiving surface of each light detection unit overlaps with the image receiving surface 1151.

When the projector 1100 and the screen unit 1150 are in the static state without vibration, the light is projected from the projector 1100 onto the image receiving surface 1151, within which a video image is displayed.

When no vibration occurs, the first and second light detection units 1161 and 1162 each receives the projected light on a part of its light receiving surface, and outputs a light detection signal corresponding to the projected light.

Here, a vibration which occurs in at least one of the projector 1100 and the screen unit 1150 causes a change in the light receiving range on the light receiving surface of each of the first and second light detection units 1161 and 1162. As a result, the first and second light detection units 1161 and 1162 each outputs a light detection signal according to the change in the light receiving range in which the projected light is received.

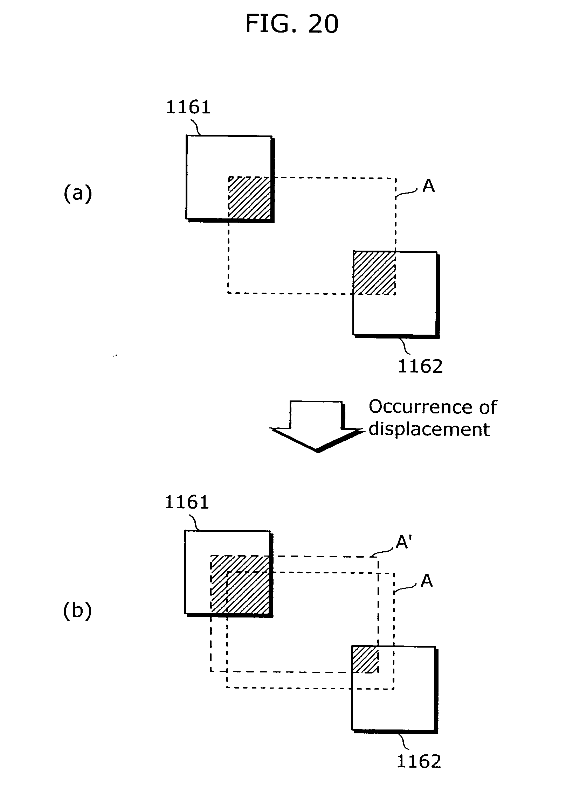

FIG. 20 is an illustration for describing light receiving ranges of the first and second light detection units 1161 and 1162, in which the projected light is received. Note that shaded areas shown in FIG. 20 show the ranges of the light receiving surfaces of the first and second light detection units 1161 and 1162, in which the projected light is illuminated.

As shown in FIG. 20(a), when vibration does not occur in the projector 1100 and the screen unit 1150, the light outputted from the projector 1100 is illuminated to an area A on the screen unit 1150, and the first and second light detection units 1161 and 1162 each receives the projected light on a part of its light receiving surface of approximately same size.

Here, as shown in FIG. 20(b), vibration which occurs in at least one of the projector 1100 and the screen unit 1150 causes a displacement in the area on the screen unit 1150 in which the light outputted from the projector 1100 is illuminated, from the area A to the area A'. As a result, the first light detection unit 1161 receives the projected light in a larger range, while the second light detection unit 1162 receives the projected light in a smaller range, and the first and second light detection units 1161 and 1162 respectively output light detection signals depending on the changes in their light receiving ranges.

The screen information processing unit 1253 derives the displacement of the display position of the video image to be displayed on the screen unit 1150, based on the light detection signals outputted from the above-mentioned first and second light detection units 1161 and 1162.

When obtaining the video displacement information, the control unit 1205 grasps the displacement of the display position of the video image to be displayed on the screen unit 1150, from the video displacement information, and calculates, as a correction amount for suppressing the displacement, the pivoting direction and the pivoting angle of the reflecting mirror 200. Then, the control unit 1205 outputs, to the pivoting mechanism of the adjustment unit 106, a control signal instructing it to pivot the reflecting mirror 200 by the correction amount. The pivoting mechanism of the adjustment unit 106 rotates the X rotation shaft 201 and the Y rotation shaft 202 based on the control signal so as to pivot the reflecting mirror 200 by the correction amount instructed by the control unit 1205.

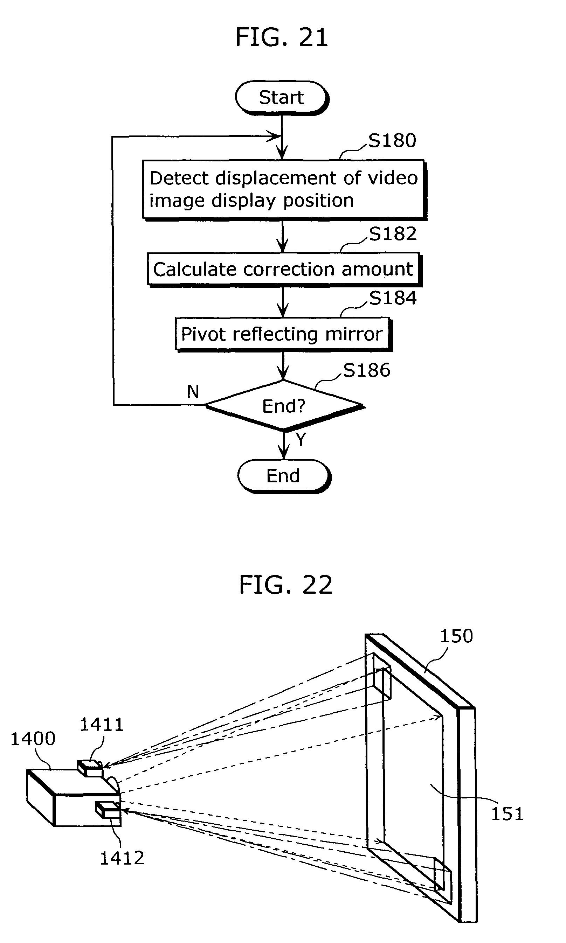

FIG. 21 is a flowchart showing a series of operations of the video display system in the present embodiment.

First, the screen unit 1150 derives, by detecting the projected light, the displacement of the position of the video image which was displayed on itself (Step S180). In other words, the screen unit 1150 detects the displacement of the video image display position. Then, after being notified of the displacement from the screen unit 1150, the projector 1100 calculates, as a correction amount for suppressing the displacement, the pivoting direction and the pivoting angle of the reflecting mirror 200 (Step S182). Next, the projector 1100 pivots the reflecting mirror 200 by the correction amount (Step S184). Here, the projector 1100 and the screen unit 1150 judge whether or not they are instructed to end the above operations (Step S146), and they end the above operations when they judge that they are instructed to end the operations (Y in Step S146), while they repeatedly execute the operations from Step S180 through Step 186 when they judge that they are not instructed to end the operations (N in Step S146).

As described above, in the present embodiment, even if at least one of the projector 1100 and the screen unit 1150 is vibrated, the displacement of the display position of the video image to be displayed on the screen unit 150 is directly derived based on the vibration results of the first and second light detection units 1161 and 1162, and the reflecting mirror 200 of the adjustment unit 106 is pivoted so as to suppress the displacement and thus the output direction of the projection light is changed. Therefore, it becomes possible to suppress the variations in the display position.

It should be noted that the adjustment unit 106 of the present embodiment includes the adjustment unit 106 so as to change the output direction of the projection light, but it may include the light output unit 602 of the second embodiment instead of the light output unit 102 so as to change the output position of the projection light by moving the LCD panel. Or, the present embodiment may include the picture signal output unit 701 of the third embodiment instead of the picture signal output unit 101 so as to change the output position of the projection light by processing the picture signal. Or, the projector 1100 may be comprised of the projector body and the body driving unit like the fourth embodiment so as to change the output direction of the projection light by pivoting the projector body.

Also, the present embodiment includes the first and second light detection units 1161 and 1162, but the present invention is not limited to two light detection units, and it may include one, or three or more.

Additionally, in the present embodiment, the first and second light output units 1161 and 1162 detect the projected light, but the projector 1100 may output a test signal like laser light so that the first and second light output units 1161 and 1162 detect the test signal. In this case, the first and second light output units 1161 and 1162 respectively output the light detection signals depending on the changes in the positions of receiving the test signal on their respective light receiving surfaces, and the screen information processing unit 1253 derives the displacement of the display position of the video image to be displayed on the screen unit 1150, based on the light detection signal.

Furthermore, the screen unit 1150 of the present embodiment includes the screen information processing unit 1253, but the projector 1100 may include the screen information processing unit 1253. In this case, the transmitting unit 1254 of the screen unit 1150 transmits the light detection signals outputted from the first and second light output units 1161 and 1162 to the receiving unit 1207 of the projector 1100, and the screen information processing unit 1253 creates video displacement information based on the light detection signals received by the receiving unit 1207.

### (Sixth Embodiment)

Next, a description is given below of a video display system of the sixth embodiment of the present invention.

FIG. 22 is an external view of the video display system of the sixth embodiment of the present invention, which shows the external structure thereof.

This video display system is designed for suppressing variations in the video image display position and improving viewing comfort. The video display system is comprised of a projector 1400 which projects a light for displaying video images, and the screen unit 150 of the first embodiment which receives the projected light so as to display the video images.

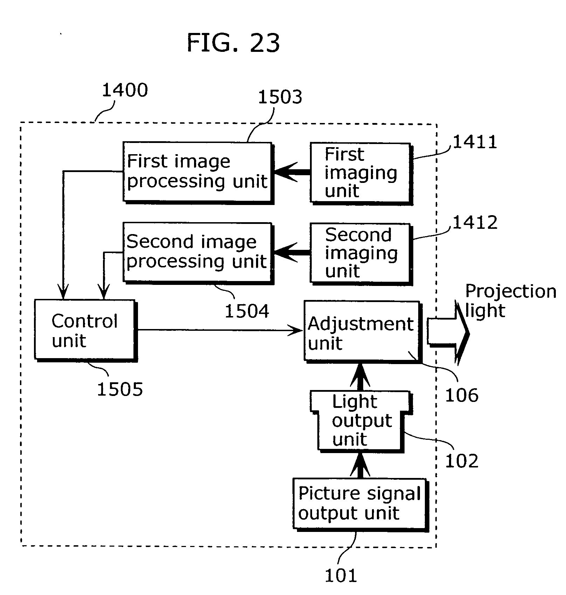

FIG. 23 is an internal view of the projector 1400 in the video display system of the present embodiment, which shows the internal structure thereof.

The projector body 1400 includes, as is the case with the first embodiment, the picture signal output unit 101, the light output unit 102 and the adjustment unit 106. The projector 1400 further includes first and second imaging units 1411 and 1412 which capture images on the screen unit 150 and output imaging signals, first and second image processing units 1503 and 1504 which execute image processing based on the imaging signals outputted from the first and second imaging units 1411 and 1412, and a control unit 1505 which controls the adjustment unit 106 by outputting a control signal corresponding to the results of the processing executed by the first and second image processing units 1503 and 1504.

The present embodiment as described above is characterized in that the displacement of the video image is directly derived, not by detecting the vibrations of the projector 1400 and the screen unit 150 like the first to fourth embodiments but by capturing the video images displayed on the screen unit 150, and the direction of the projection light is adjusted so as to suppress the displacement. In other words, in the present embodiment, the vibration is detected based on the video imaging results and the displacement of the video image is derived, and the direction of the projection light is adjusted so as to suppress the displacement of the video image.

The imaging range of the first and second imaging units 1411 and 1412 are predetermined so that they are placed along the diagonal line on the image receiving surface 151 of the screen unit 1150 and includes end portions of the image receiving surface 151, as shown in FIG. 22.

When the projector 1400 and the screen unit 150 are in the static state without vibration, the light is projected from the projector 1400 to the image receiving surface 151, within which a video image is displayed.

When no vibration occurs, the first and second imaging units 1411 and 1412 each captures the end portion of the video image displayed on the image receiving surface 151 of the screen unit 150.

Here, a vibration which occurs in at least one of the projector 1400 and the screen unit 150 causes a change in the ranges of the projected video image (video image displayed on the screen unit 150 by the projection light) which are to be captured by the first and second imaging units 1411 and 1412. As a result, the first and second imaging units 1411 and 1412 output imaging signals depending on the changes in respective imaging results.

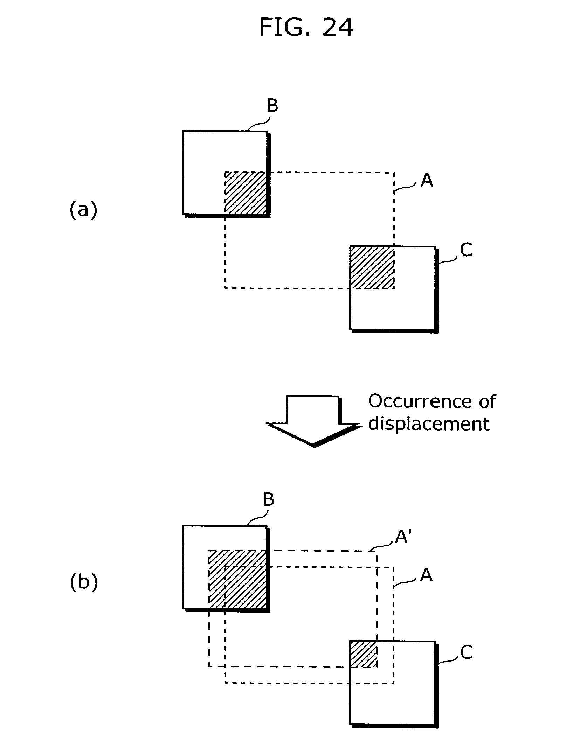

FIG. 24 is an illustration for describing ranges of projected video image which are to be captured by the first and second imaging units 1411 and 1412. Note that shaded areas shown in FIG. 24 shows the ranges of the projected video images which are to be captured by the first and second imaging units 1411 and 1412.

As shown in FIG. 24(a), when vibrations do not occur in the projector 1400 and the screen unit 150, the light outputted from the projector 1400 is projected to the area A on the screen unit 150, and a range B and a range C which are the imaging ranges of the first and second imaging units 1411 and 1412 respectively include the end portions of the projected video image of approximately same size.

Here, as shown in FIG. 24(b), a vibration which occurs in at least one of the projector 1400 and the screen unit 150 causes a displacement in the area on the screen unit 150 in which the light outputted from the projector 1400 is projected, from the area A to the area A'. As a result, the first imaging unit 1411 captures a larger range of the end portion of the projected video image, while the second a smaller range of the end portion thereof, and the first and second imaging units 1411 and 1412 respectively output imaging signals depending on the changes in their imaging ranges of the projected video image.

Each of the first and second image processing units 1503 and 1504 derives the horizontal and vertical displacement of the projected video image based on the change in the outline of the projected image and the like, by executing the image processing based on the imaging signals outputted from the first and second imaging units 1411 and 1412, and outputs video displacement information indicating the derived displacement to the control unit 1505.

When obtaining the video displacement information from the first and second image processing units 1503 and 1504, the control unit 1505 grasps the displacement of the position of the video image to be displayed on the screen unit 150, from the video displacement information, and calculates, as a correction amount for suppressing the displacement, the pivoting direction and the pivoting angle of the reflecting mirror 200. Then, the control unit 1505 outputs, to the pivoting mechanism of the adjustment unit 106, a control signal instructing it to pivot the reflecting mirror 200 by the correction amount. The pivoting mechanism of the adjustment unit 106 rotates the X rotation shaft 201 and the Y rotation shaft 202 based on the control signal so as to pivot the reflecting mirror 200 by the correction amount instructed by the control unit 1505.

As described above, in the present embodiment, even if at least one of the projector 1400 and the screen unit 1150 is vibrated, the displacement of the position of the video image to be displayed on the screen unit 150 is directly derived based on the imaging results of the first and second imaging units 1411 and 1412, and the reflecting mirror 200 of the adjustment unit 106 is pivoted so as to suppress the displacement and thus the output direction of the projection light is changed. Therefore, it becomes possible to suppress the variations in the display position. Also, differently from the fifth embodiment, there is no need to provide a special detection unit in the screen unit of the present embodiment, so it becomes possible to simplify the structure of the screen unit.

It should be noted that the present embodiment includes the adjustment unit 106 so as to change the output direction of the projection light, but it may include the light output unit 602 of the second embodiment instead of the light output unit 102 so as to change the output direction of the projection light by moving the LCD panel. Or, the present embodiment may include the picture signal output unit 701 of the third embodiment instead of the picture signal output unit 101 so as to change the output position of the projection light by processing the picture signal. Or, the projector 1400 may be comprised of the projector body and the body driving unit like the fourth embodiment so as to change the output direction of the projection light by pivoting the projector body.

Also, the present embodiment includes the first and second imaging units 1411 and 1412, but the present invention is not limited to two imaging units, and it may include one, or three or more. Furthermore, although the first and second imaging units 1411 and 1412 capture the end portions of the projected video image, they may capture any other portion than the end portions.

It should also be noted that the video display system of the present invention is comprised of the projector which projects a projection light and the screen unit having the image receiving surface in the first to sixth embodiments, but the video display system of the present invention may be comprised of a device which isotropically outputs a projection light for displaying a video image so as to be viewed directly, for example, a so-called direct-view type display, and a reflecting mirror which reflects the projected light to display the video image.

The video display system as described above reflects a video image to be displayed on a direct-view type display such as an LCD screen using a reflecting mirror and shows the reflected video image to the user. This reflection of the video image using the reflecting mirror allows setting of a longer distance between the LCD screen and the user's eyes and therefore allows alleviation of the user's eyestrain in any confined space like the inside of a vehicle. Additionally, in this video display system, for example, a direct-view type display includes a video reflection unit which offers variable light reflectivity for each pixel so as to generate a video projection light from the light reflected by the video reflection unit. The direct-view type display changes the output position of the video projection light by moving the video reflection unit so as to suppress the displacement of the position of the video image to be displayed on the reflecting mirror.

As described above, the present invention can be applied to a video display system in which a device that is a video image source which outputs a video projection light for displaying a video image is provided separately from an image receiving unit which receives the video projection light and displays the video image so that the user can see it by his eyes.

In addition, in the first to sixth embodiment, the variations in the display position of the video image to be displayed on the screen unit are suppressed by changing the projection direction of the light or changing the projection position of the light to be projected from the projector. However, such embodiments may include a moving mechanism for moving the screen unit so as to suppress the variations in the display position of the video image on the screen unit by moving the screen unit using that moving mechanism.

### (Seventh Embodiment)

By the way, even if the displacement of the video image display position is suppressed in the manner as described in the first to sixth embodiments, the video image to be displayed on the image receiving surface of the screen unit is sometimes distorted because the light which should be projected perpendicularly to the image receiving surface is projected obliquely due to a significant change in the orientation of the screen unit.

So, a description is given of a video display system of the seventh embodiment of the present invention for suppressing the occurrence of such distortion of a video image.

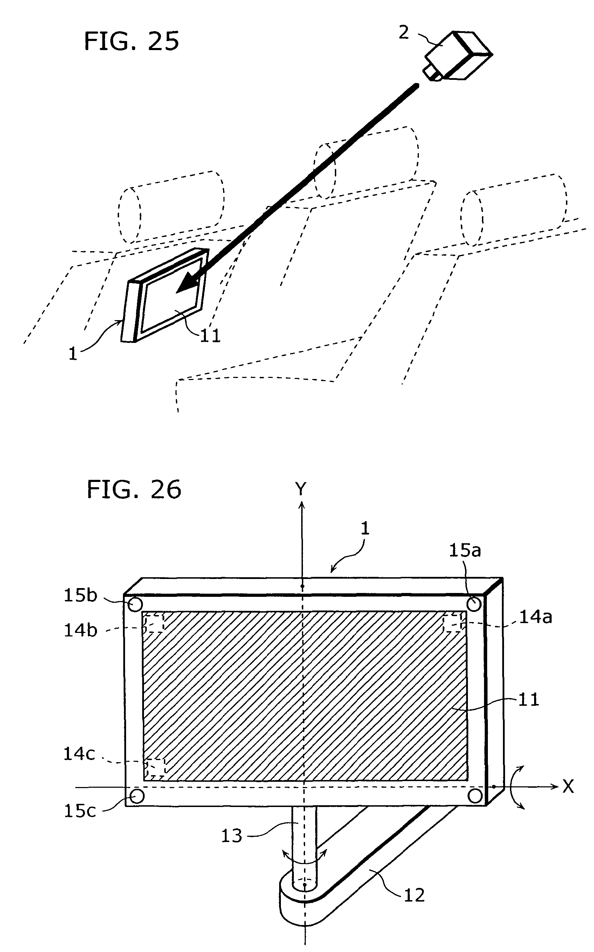

FIG. 25 is an external view of the video display system of the seventh embodiment of the present invention, which shows the external structure thereof.

This video display system is designed for suppressing distortion of video images and improving viewing comfort. The video display system is comprised of a projector 2 and a screen unit 1.

The screen unit 1 is set on the back of the backrest of the front seat in a vehicle, for example, and receives the light projected from the projector 2 and displays the video image on its own image receiving surface 11. Here, the image receiving surface 11 is a plane which is typically rectangular and on which a video image is displayed.

The screen unit 1 also includes a pivoting mechanism (hereinafter referred to as a display side pivoting mechanism) for two-direction pivoting so as to change the orientation of the image receiving surface 11.

FIG. 26 is an external view of the screen unit 1, which shows the appearance thereof.

The screen unit 1 includes a supporting member 12 and a shaft 13 which constitute a part of the display side pivoting mechanism, first to third light detectors 14a to 14c which detect light projected from the projector 2, and first to third transmitters 15a to 15c which transmit distance-measuring signals. Note that the details of other elements included in the display side pivoting mechanism will be described later.

The supporting member 12 is fixed on the back of the front seat and has a shape for bearing and supporting the shaft 13.

The shaft 13 is mounted so that the body of the screen unit 1 can be pivoted about the shaft 13, namely, the Y axis. More specifically, one end of the shaft 13 is mounted on the bearing (not shown in the diagram) formed on the supporting member 12 and the other end is mounted on the body of the screen unit 1. Also, the shaft 13 is mechanically connected to a second motor 19b to be described later.

It should be noted that the body of the screen unit 1 contains a gear or the like, not shown in the diagram, which is mechanically connected to a first motor 19a to be described later so that the body can be pivoted about the X axis.

The display side pivoting mechanism as described above allows the user to change, as he/she likes, the angle (hereinafter referred to as an azimuth angle) between the normal direction of the image receiving surface 11 and the vertical plane. Also, the screen unit 1 automatically changes the azimuth angle by the driving force of the second motor 19b. Furthermore, the screen unit 1 or the user also changes the angle (namely, an elevation angle) between the normal direction of the image receiving surface 11 and the horizontal plane.

As shown in FIG. 25, the projector 2 is set on the ceiling of the vehicle, for example, and projects the light toward the image receiving surface 11 of the screen unit 1. The projector 2 further includes a mechanism (hereinafter referred to as a projection side pivoting mechanism) same as the above-mentioned display side pivoting mechanism so as to automatically change the light projection direction.

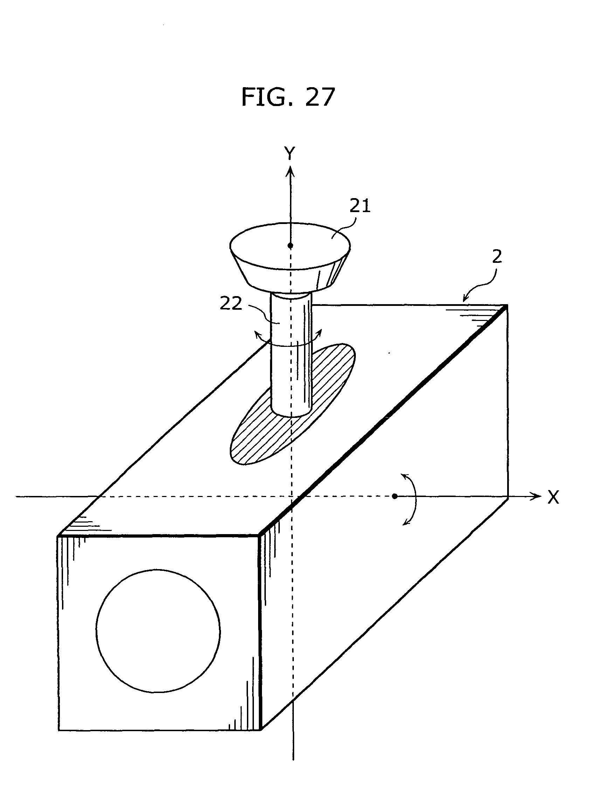

FIG. 27 is an external view of the projector 2, which shows the appearance thereof.

As shown in FIG. 27, the projector 2 includes a supporting element 21 and a shaft 22 which constitute a part of the projection side pivoting mechanism.

The supporting member 21 is fixed on the ceiling of the vehicle, and further bears and supports one end of the shaft 22.

The shaft 22 is mounted on the projector 2 so that the body of the projector 2 can be pivoted about the shaft 22 (namely, Y axis). More specifically, one end of the shaft 22 is mounted on the bearing (not shown in the diagram) of the supporting member 21 and the other end thereof is mounted on the bearing (not shown in the diagram) in the body of the projector 2. Also, a mechanism is integrated in the projector 2 for pivoting the body of the projector 2 about the X axis.

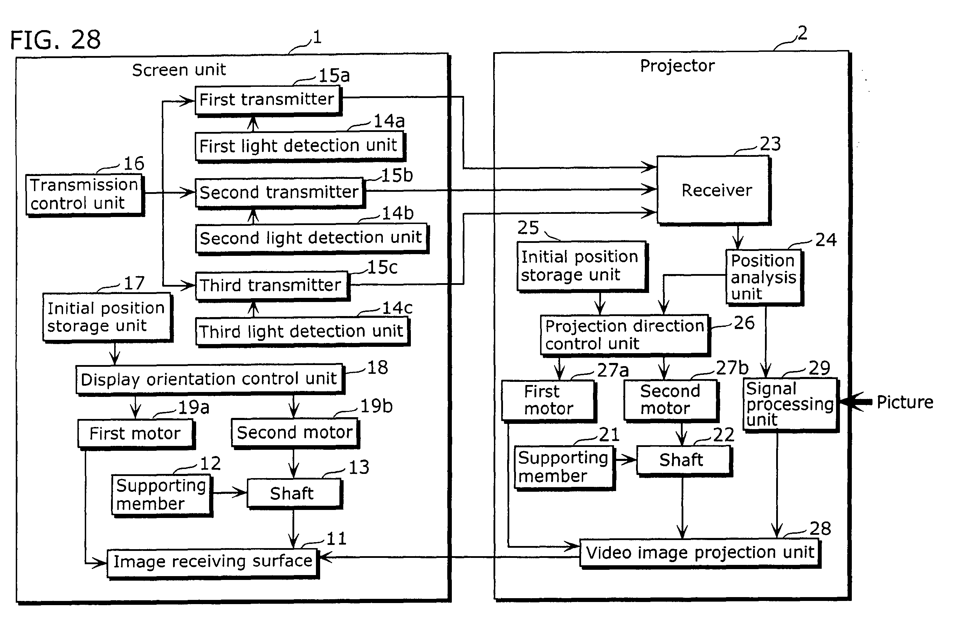

FIG. 28 is a structure diagram showing structures of the screen unit 1 and the projector 2.

The screen unit 1 includes not only the above-mentioned image receiving surface 11, the supporting member 12 and the shaft 13, the first to third light detector 14a to 14c and the first to third transmitters 15a to 15c, but also a transmission control unit 16, an initial position storage unit 17, a display orientation control unit 18, a first motor 19a and a second motor 19b.

The first to third light detectors 14a to 14c are mounted at different positions on the back of the image receiving surface 11 so as to detect the light projected onto the image receiving surface 11. In the present embodiment, the first to third light detectors 14a to 14c are mounted at the positions around the three vertices of the image receiving surface 11 at which the projected light can be detected, as illustratively shown in FIG. 26. These first to third light detectors 14a to 14c continuously output, to the first to third transmitters 15a to 15c, first to third detection signals indicating whether or not they are now detecting the light projected onto the image receiving surface 11.

As shown in FIG. 26, the first to third transmitters 15a to 15c are mounted at different positions near the image receiving surface 11 so that the projector 2 can detecte the position of the image receiving surface 11. In the present embodiment, the first to third transmitters 15a to 15c are mounted illustratively at the positions which can be considered to be equivalent to the three vertices of the image receiving surface 11. In the following description, the positions where the first to third transmitters 15a to 15c are mounted are referred to as first to third mounting positions. It is preferable that the first to third mounting positions are as apart from each other as possible so that the projector 2 can perform the distance-measurement processing (to be described later) with less errors. The first to third transmitters 15a to 15c transmit the first to third signals which are modulated by the first to third detection signals, in response to the instruction from the transmission control unit 16. Here, the first to third signals are referred to as first to third distance-measuring signals.

The transmission control unit 16 selects any one of the first to third transmitters 15a to 15c at predetermined intervals from a predetermined reference time, and instructs the selected transmitter to transmit the signal. Here, the transmission order is assigned to the first to third transmitters 15a to 15c in order to allow the projector 2 to perform the distance-measurement processing. For example, the first transmitter 15a transmits first, the second transmitter 15b transmits second, and the third transmitter 15c transmits third. According to this transmission order, the transmission control unit 16 selects, at the above intervals, one transmitter to which the transmission instruction should be given.

The initial position storage unit 17 typically contain a nonvolatile memory, and stores the initial position (hereinafter referred to as an initial display position) of the image receiving surface 11. In the present embodiment, the image receiving surface 11 can be pivoted about the X axis and the Y axis, as mentioned above, so the initial display position is comprised of an initial azimuth angle indicating the angle by which the image receiving surface 11 should be pivoted from the reference position toward the azimuth direction and an initial elevation angle indicating the angle by which the image receiving surface 11 should be pivoted from the reference position toward the elevation direction.

This initial display position is typically registered in the initial position storage unit 17 by an installer when the video display system is installed in a vehicle. Here, it is preferable that the installer detects the location of the projector 2 and the screen unit 1 so that the optical axis of the projector 2 is orthogonal to the image receiving surface 11 of the screen unit 1, and stores the initial display position based on the azimuth angle and the elevation angle at this installation location. It should be noted that in the following description, the above-mentioned preferable initial display position is stored in the initial position storage unit 17.

The display orientation control unit 18 controls the first motor 19a and the second motor 19b so as to move the image receiving surface 11 depending on the initial display position stored in the initial position storage unit 17. In other words, the display orientation control unit 18 controls the above motors 19a and 19b to pivot the image receiving surface 11 about the X axis and the Y axis so that the image receiving surface 11 is placed at the initial display position.

Under the control of the display orientation control unit 18, the first motor 19a drives the image receiving surface 11 so that the surface fits into the elevation angle indicated in the initial display position. As a result, the screen unit 1 pivots toward the elevation direction and stops at the initial display position.

Under the control of the display orientation control unit 18, the second motor 19b drives the image receiving surface 11 so that the surface fits into the azimuth angle indicated in the initial display position. As a result, the screen unit 1 pivots toward the azimuth direction and stops at the initial display position.

In addition to the above supporting member 21 and the shaft 22, the projector 2 further includes a receiver 23, a position analysis unit 24, an initial position storage unit 25, a projection direction control unit 26, a first motor 17a, a second motor 27b, a video image projection unit 28 and a signal processing unit 29.

The receiver 23 receives the above-mentioned first to third distance-measuring signals and outputs them to the position analysis unit 24.

The position analysis unit 24 measures the distances from the first to third mounting positions to the projector 2, as first to third measured distances, using the inputted first to third distance-measuring signals, and further detects the positional deviation of the video image from the position where it should be displayed on the image receiving surface 11. It should be noted that the details of the above distance-measurement processing and the positional deviation detection processing are described later. Furthermore, the position analysis unit 24 outputs the first to third measured distances to the signal processing unit 29, and outputs the detected positional deviation of the video image to the projection direction control unit 26.

The initial position storage unit 25 typically contain a nonvolatile memory, and stores the initial position (hereinafter referred to as an initial projection position) of the projector 2. In the present embodiment, the initial projection position is comprised of an initial azimuth angle indicating the angle by which the projector 2 should be pivoted from the reference position toward the azimuth direction and an initial elevation angle indicating the angle by which the projector 2 should be pivoted from the reference position toward the elevation direction. This initial projection position is registered in the initial position storage unit 25 by an installer when the video display system is installed. It is preferable that the initial projection position is detected based on the azimuth angle and the elevation angle at the time when the optical axis of the projector 2 is orthogonal to the image receiving surface 11 of the screen unit 1. It should be noted that in the following description, the above-mentioned preferable initial projection position is stored in the initial position storage unit 25.

The projection direction control unit 26 controls the first motor 27a and the second motor 27b so as to move the projector 2 to the initial projection position stored in the initial position storage unit 25. Here, the projection direction control unit 26 controls the above motors 27a and 27b to pivot the projector 2 about the X axis and the Y axis by the initial azimuth angle and the initial elevation angle of the initial projection position. Furthermore, the projection direction control unit 26 controls at least one of the first motor 27a and the second motor 27b in order to eliminate the positional deviation notified from the position analysis unit 24. In other words, the projection direction control unit 26 controls at least one of the above motors 27a and 27b so as to pivot the projector 2 about the X axis and the Y axis and therefore eliminate the above positional deviation.

The first motor 27a is driven under the control of the projection direction control unit 26 so as to pivot the projector 2 about the X axis, namely toward the elevation direction. According to such driving of the first motor 27a, the projector 2 stops at the initial elevation angle of the initial projection position, or pivots toward the elevation direction by a predetermined angle so as to eliminate its positional deviation.

The second motor 27b is driven under the control of the projection direction control unit 26 so as to pivot the projector 2 about the Y axis, namely toward the azimuth direction. According to such driving of the second motor 27b, the projector 2 stops at the initial azimuth angle of the initial projection position, or pivots toward the azimuth direction by a predetermined angle so as to eliminate its positional deviation.

The video image projection unit 28 is driven by the above first and second motors 27a and 27b so as to change its projection direction. Also, the video image projection unit 28 has an optical system including a lens and a mirror, and projects light to display, on the image receiving surface 11, the picture indicated by the picture signal outputted from the signal processing unit 29.

The signal processing unit 29 obtains a picture signal indicating a picture of at least one frame which is commonly rectangular. Here, if the light which directly represents the picture of the picture signal is projected, the displayed picture is sometimes distorted due to the placement of the screen unit 1 and the projector 2. In order to solve this distortion, the signal processing unit 29 performs signal processing on the obtained picture signal to avoid the distortion of the video image to be displayed on the screen unit 1, according to the first to third measured distances received from the position analysis unit 24. In other words, when the signal processing unit 29 judges, according to the first to third measured distances, that no distortion will occur in the picture, it outputs the picture signal to the video image projection unit 28 without performing signal processing on the obtained picture signal. On the other hand, when the signal processing unit 29 judges that a distortion is to occur in the picture, it performs signal processing (shape-change processing) on the picture signal so as to change the shape of the picture indicated by the obtained picture signal, and outputs the processed signal to the video image projection unit 28. Note that the details of the shape-change processing is described later.

Next, a detailed description is given below of the operations of the screen unit 1 and the projector 2 having the above-mentioned structures.

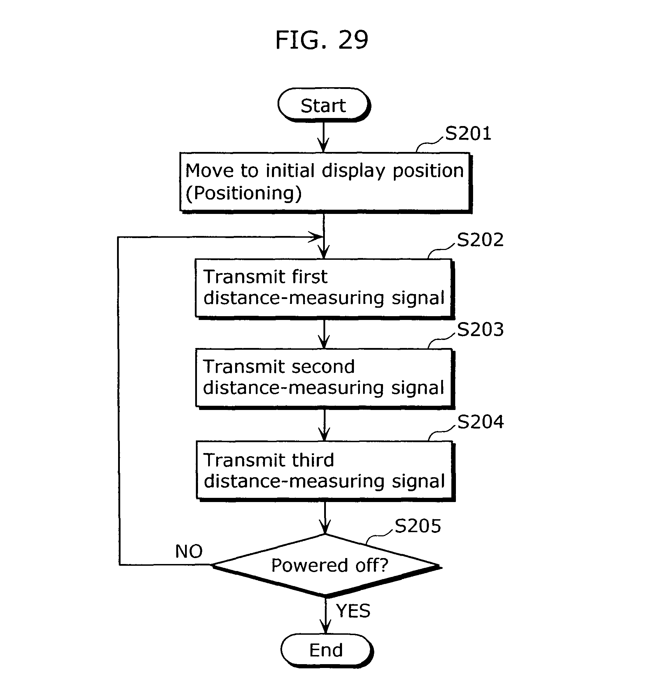

FIG. 29 is a flowchart showing the operation procedure of the screen unit 1.

First, when the video display system is powered on, the screen unit 1 moves to the initial display position (Step S201). More specifically, the display orientation control unit 18 reads the initial display position from the initial position storage unit 17 so as to control the first and second motors 19a and 19b. The first motor 19a and the second motor 19b are driven under that control. The screen unit 1 stops at the initial display position according to the driving of these motors. After this Step S201, the user changes the orientation of the image receiving surface 11 by manually pivoting the screen unit 1 toward his desired direction in which he can view the displayed video image easily.

This positional adjustment is made not only on the side of the screen unit 1 but also on the side of the projector 2, after the video display system is powered on.

After the positional adjustments of the screen unit 1 and the projector 2 are completed, the screen unit 1 transmits the first to third distance-measuring signals depending on the light projected from the video image projection unit 28 (Steps S202 to S204). More specifically, the transmission control unit 16 instructs the first transmitter 15a to transmit the distance-measuring signal after a predetermined time period after the video display system is powered on. In response to this instruction, the first transmitter 15a receives the first detection signal from the first light detector 14a, and transmits the first distance-measuring signal on which the received first detection signal is superimposed (Step S202). Here, the predetermined time period denotes a time period within which the completion of the processing of Step S201 is guaranteed, based on the power-on time as a reference time.

The transmission control unit 16 instructs the second transmitter 15b to transmit the distance-measuring signal after a predetermined standby time period after the processing of Step S202 is completed. In response to this instruction, the second transmitter 15b receives the second detection signal from the second light detector 14b, and transmits the second distance-measuring signal on which the received second detection signal is superimposed (Step S203).

The transmission control unit 16 instructs the third transmitter 15c to transmit the distance-measuring signal after the above predetermined standby time period after the processing of Step S203 is completed. In response to this instruction, the third transmitter 15c receives the third detection signal from the third light detector 14c, and transmits the third distance-measuring signal on which the received third detection signal is superimposed (Step S204).

After the above-mentioned processing of Steps S202 to S204, the screen unit 1 judges whether or not the video display system is powered off (Step S205). When the screen unit 1 judges that the power has not been turned off (NO in Step S205), it repeatedly executes the processing from S202. However, when the screen unit 1 performs the processing of Step S202 for the first time, it performs immediately after the processing of Step S201, but when it performs the processing of Step S202 for the second and following times, it transmits the first distance-measuring signal after the above predetermined standby time period after the completion of Step S204.

On the other hand, when the screen unit 1 judges that the power has been turned off (YES in Step S205), it terminates all the processing.

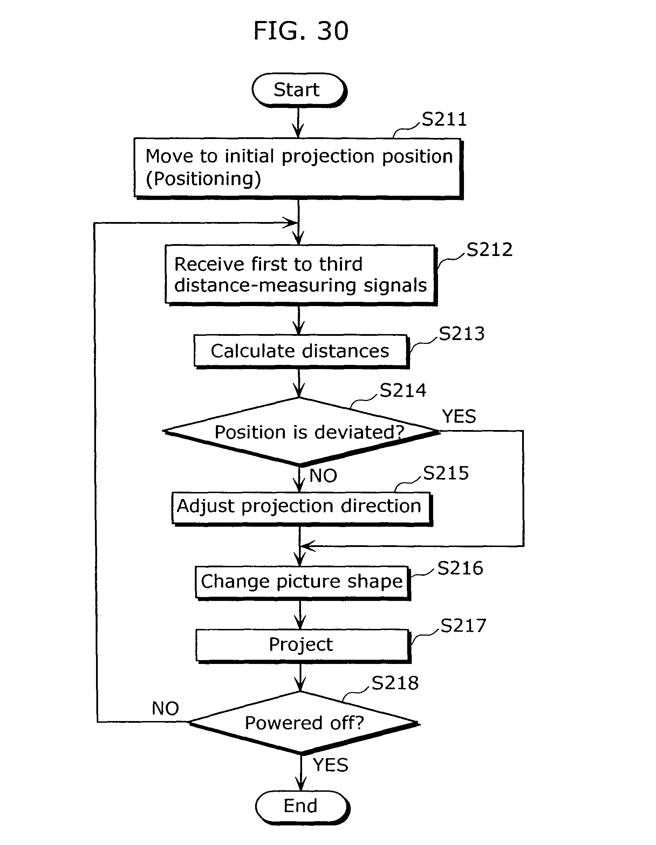

FIG. 30 is a flowchart showing the operation procedure of the projector 2.

When the video display system is powered on, the projector 2 moves to the initial projection position (Step S211). More specifically, the projection direction control unit 26 reads the initial projection position from the initial position storage unit 25, and then controls the first and second motors 27a and 27b depending on the initial projection position. The first motor 27a and the second motor 27b are driven under that control. The projector 2 stops at the initial projection position by the driving of these motors. After that, the video image projection unit 28 starts its projection.

When the video display system is powered on, the screen unit 1 transmits the first to third distance-measuring signals at the above-mentioned predetermined intervals. After performing the processing of Step S211, the projector 2 receives these distance-measuring signals (Step S212). More specifically, after the receiver 23 receives the first to third distance-measuring signals sequentially, it outputs these first to third distance-measuring signals to the position analysis unit 24.

Next, the position analysis unit 24 of the projector 2 calculates the respective distances from the first to third transmitters 15a to 15c to the projector 2, using the first to third distance-measuring signals (Step S213). The position analysis unit 24 previously stores, as a precondition to distance calculation, the order and interval in which the first to third transmitters 15a to 15c transmit the first to third distance-measuring signals after the power is turned on. In other words, the position analysis unit 24 stores when the first to third distance-measuring signals are to be transmitted based on the power-on time. The position analysis unit 24 counts the reception times of these first to third distance-measuring signals starting from the power-on time as a reference time. Furthermore, the propagation speeds of the first to third distance-measuring signals in the space are already known. Based on the above, the position analysis unit 24 calculates (Reception time of First distance-measuring signal - Transmission time of First distance-measuring signal) × Propagation speed, so as to calculate the distance from the first transmitter 15a to the projector 2 (hereinafter referred to as a first distance). In the same manner, the position analysis unit 24 calculates the distance from the second transmitter 15b to the projector 2 and the distance from the third transmitter 15c to the projector 2 (hereinafter referred to as a second distance and a third distance respectively).

Next, the projector 2 judges whether there is a positional deviation or not (Step S214). More specifically, the position analysis unit 24 judges whether all of the first to third light detectors 14a to 14c receive the projected light, based on the first to third detection signals superimposed on the received first to third distance-measuring signals. In the case where all of the first to third light detectors 14a to 14c receive the projected light, the position analysis unit 24 considers that there is no positional deviation. Since there is no need to change the projection direction in this case (YES in Step S214), the projector 2 performs the processing of Step S216 to be described later.

In the opposite case (NO in Step S214), the projector 2 adjusts the projection direction (Step S215). More specifically, the position analysis unit 24 detects the positional deviation quantitatively based on the area of the light detector in which the projected light is not received, and notifies the projection direction control unit 26 of the positional deviation. In response to this notification, the projection direction control unit 26 controls at least one of the first and second motors 27a and 27b. In other words, at least one of the first and second motors 27a and 27b pivots, under that control, the projector 2 by a predetermined angle so as to eliminate the positional deviation. As a result, the projection direction of the projector 2 is changed so that all of the light detectors 14a to 14c receive the projected light.

It should be noted that in the processing of Step S215, the position analysis unit 24 may calculate, using the first to third distances, the angle by which the projector 2 should be pivoted toward at least one of the azimuth direction and the elevation direction. In this case, the projection direction control unit 26 adjusts the projection direction of the projector 2 by the angle calculated by the position analysis unit 24.

When the projector 2 judges that there is no positional deviation after the processing of Step S215 or in Step S204, it performs the processing of picture shape change (signal processing of the picture signal) (Step S216). More specifically, the signal processing unit 29 derives the picture parameter corresponding to the three-dimensional position of the image receiving surface 11, based on the first to third distances calculated by the position analysis unit 24. Then, the signal processing unit 29 performs signal processing on the picture signal so as to change the picture shape, based on the picture parameter, and outputs the processed picture signal to the video image projection unit 28.

It should be noted that the optical axis of the projector 2 is orthogonal to the image receiving surface 11 of the screen unit 1 when the first to third distances are equal, so there is no deviation in the video image displayed on the image receiving surface 11. Therefore, in this case, the signal processing unit 29 outputs the obtained picture signal to the video image projection unit 28 without performing signal processing on the picture signal.

After the processing of Step S216, the video image projection unit 28 projects the light toward the image receiving surface 11 based on the picture signal obtained from the signal processing unit 29 (Step S217). When this light is projected toward the image receiving surface 11, a rectangular picture is displayed on the image receiving surface 11.

After the processing of Step S217, the projector 2 judges whether the video display system is powered off or not (Step S218). When judging that it is powered off (YES in Step S218), the projector 2 terminates all the processing, and when judging that it is not powered off (NO in Step S218), the projector 2 repeatedly executes the processing from Step S212.

Here, a detailed description is given of the processing shown in Step S216 in FIG. 30.

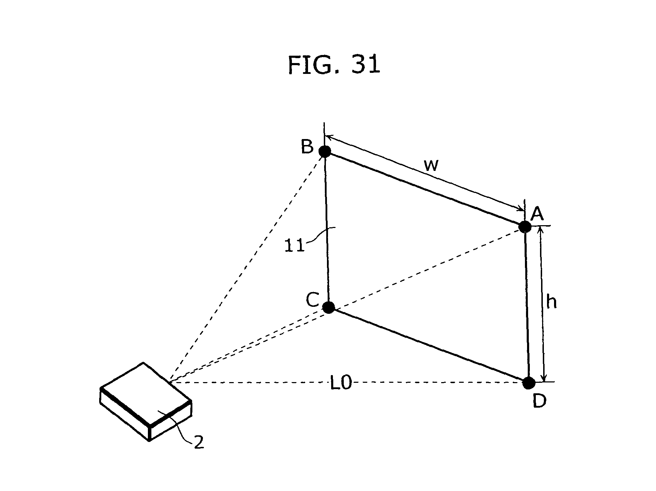

FIG. 31 is an illustration for describing how the video image (picture) is displayed without distortion by the light projected from the projector 2.

In the case where the direction of the light projected from the projector 2 is aligned perpendicular to the image receiving surface 11 of the screen unit 1, an approximately rectangular picture is displayed without distortion on the image receiving surface 11 of w × h in size. Also, in this case, the distances from respective vertices A, B, C and D of the image receiving surface 11 are all L0 equally.

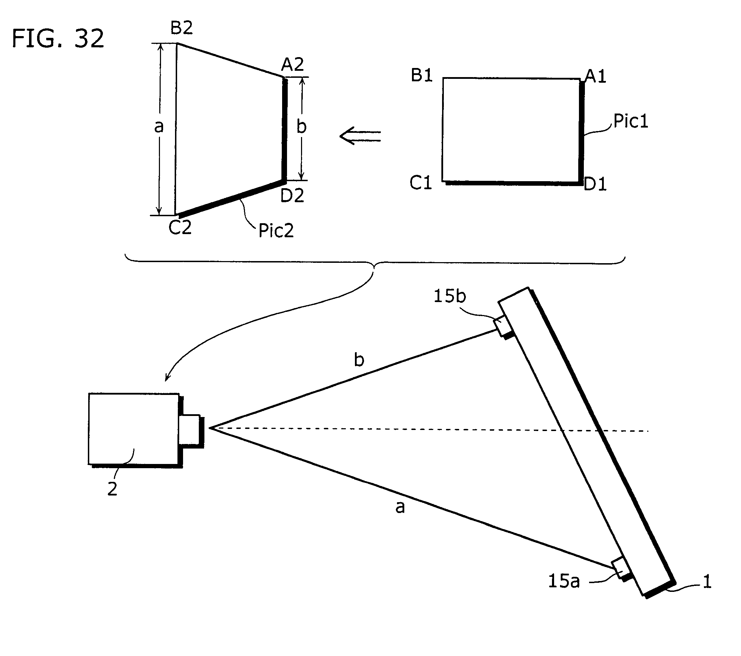

FIG. 32 is an illustration for describing how a video image (picture) which is distorted due to the tilt of the image receiving surface 11 toward the azimuth direction is corrected.

For example, in the case where the image receiving surface 11 is tilted by the user toward the azimuth direction from the position shown in FIG. 31, the first distance (distance from the first transmitter 15a to the projector 2) is a, and the second distance (distance from the second transmitter 15b to the projector 2) is b. In other words, two of the first to third distances are different from each other. In this case, the signal processing unit 29 derives the ratio between the two sides of the shape-changed picture (corrected picture) Pic2, as an example of the picture parameter.

More specifically, the signal processing unit 29 derives the ratio b to a (b:a) between the sides A2 - D2 and B2 - C2 of the corrected picture Pic. Here, the vertices A2, B2, C2 and D2 of the corrected picture Pic2 correspond to the vertices A1, B1, C1 and D1 of the uncorrected picture Pic1 respectively.

The signal processing unit 29 performs signal processing on the picture signal based on the derived picture parameter, and changes (corrects) the shape of the picture Pic1 indicated by the picture signal into a trapezoid so that the ratio between the two sides (the side A1-D1 and the side B1-C1) of the picture Pic1 which are opposed to each other become b to a (b:a). The signal processing unit 29 outputs the picture signal to the video image projection unit 28 after performing this signal processing on the signal. Note that the same processing is also performed when the image receiving surface 11 is tilted toward the elevation direction by the user.

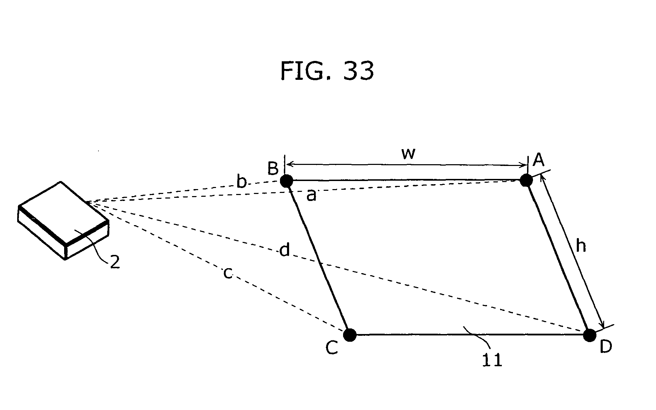

FIG. 33 is an illustration for describing how a distorted video image is displayed by the tilt of the image receiving surface 11 toward the azimuth and elevation directions.

For example, in the case where the image receiving surface 11 is tilted by the user toward the azimuth and elevation directions from the position shown in FIG. 31, the distances from the vertices A, B, C and D of the image receiving surface 11 to the projector 2 are different from each other like the distances a, b, c and d. In other words, all the first to third distances are different from each other.

Also in this case, a distorted image is displayed on the image receiving surface 11 because the direction of the light projected from the projector 2 is not perpendicular to the image receiving surface 11.

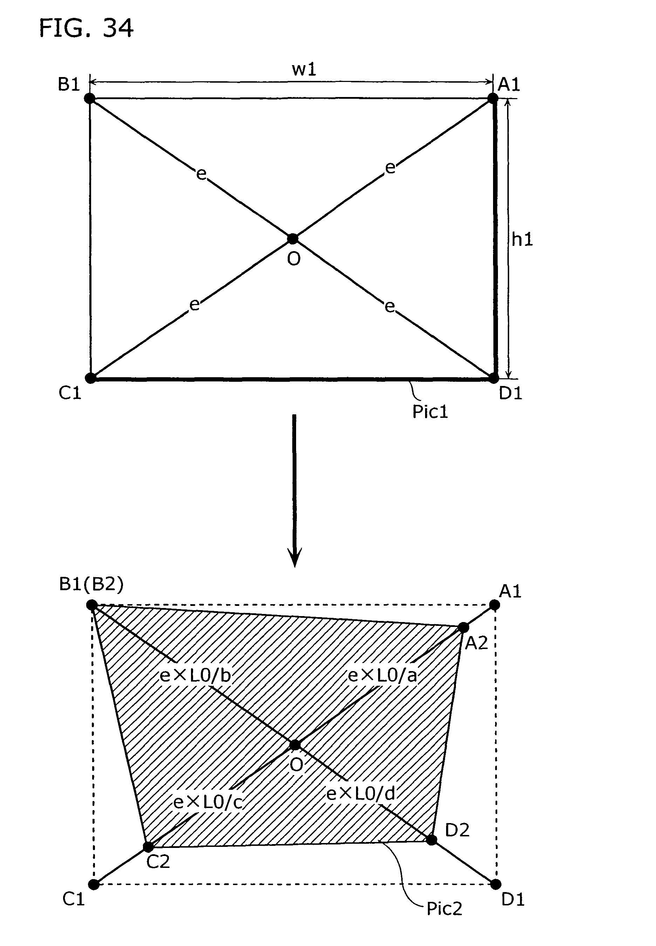

FIG. 34 is an illustration for describing the processing performed by the signal processing unit 29 in the situation shown in FIG. 33.

In such a case, the signal processing unit 29 obtains the first distance a, the second distance b and the third distance c, from the position analysis unit 24. Then, the signal processing unit 29 derives, based on these distances a, b and c, the distances from the reference point O to the vertices A2, B2, C2 and D2 of the corrected picture Pic2 (O-A2, O-B2, O-C2 and O-D2). Here, the reference point O indicates the intersection point of two diagonal lines of the uncorrected and corrected pictures Pic1 and Pic2. Note that the vertices A2, B2, C2 and D2 of the corrected picture Pic2 correspond respectively to the vertices A1, B1, C1 and D1 of the vertices of the uncorrected picture Pic1.

More specifically, the signal processing unit 29 calculates the distance d from the projector 2 to the vertex D1 using the first to third distances a, b and c because the vertices A1 to D1 of the picture Pic1 are the vertices of a single rectangle. The signal processing unit 29 also calculates the length e that is one half of the diagonal line of the picture Pic1 which is equally divided into two, based on the size (w1×h1) of the picture Pic1. Next, the signal processing unit 29 derives the distance O-A2 using e×L0/a, the distance O-B2 using e×L0/b, the distance O-C2 using e×LO/c, and the distance O-D2 using e×L0/d.

The signal processing unit 29 detects the coordinate positions of the four vertices A2 to D2, as another example of picture parameters, based on these distances (O-A2, O-B2, O-C2 and O-D2). The signal processing unit 29 changes the shape of the picture Pic1 into the corrected picture Pic2 so that the detected positions coincide with the vertices of the corrected picture Pic2.

As described above, in the video display system according to the present embodiment, using the first to third distance-measuring signals transmitted from the screen unit 1, the projector 2 calculates the distances to the three corners of the image receiving surface 11, and performs the processing on the picture signal depending on the orientation of the image receiving surface 11. By doing so, it becomes possible to display the undistorted image on the image receiving surface 11 of the screen unit 1. Furthermore, in this video display system, the positional deviation is corrected based on the first to third detection signals. Therefore, the user can view the video more comfortably even if he/she moves the projector 2 and the screen unit 1 or vibration occurs in them.

It should be noted that the screen unit 1 of the present embodiment includes three transmitters 15a to 15c for the distance-measurement processing of the projector 2. However, the present invention is not limited to these three transmitters, and the screen unit 1 may include four or more transmitters, each of which transmits a distance-measuring signal. In this case, the projector 2 calculates the distance from the projector itself to each transmitter based on the received distance-measuring signals.

The screen unit 1 of the present embodiment transmits the first to third distance-measuring signals at the above predetermined intervals. However, the present invention is not limited to this interval, and the screen unit 1 may transmit the first to third distance-measuring signals after frequency multiplexing is performed on these distance-measuring signals.

The screen unit 1 of the present embodiment is structured so that the orientation of the image receiving surface 11 changes in two directions, namely the azimuth direction and the elevation direction. However, the present invention is not limited to this structure, and the screen unit 1 may include the supporting member 12 structured to be extendable in the direction of its length. By doing so, the user can also change the orientation of the image receiving surface 11 toward the Z axis direction perpendicular to both X axis and Y axis.

The screen unit 1 of the present embodiment transmits the first to third distance-measuring signals on which the first to third detection signals are superimposed. However, the present invention is not limited to these signals, and the first to third light detectors 14a to 14c may be connected to the position analysis unit 24 via signal lines. In this case, the position analysis unit 24 receives the first to third distance-measuring signals separately from the first to third detection signals. In addition, the screen unit 1 of the present embodiment includes three light detectors 14a to 14c. However, the present invention is not limited to these three light detectors, and the screen unit 1 may include four or more light detectors.

The projector 2 of the present embodiment detects the transmission time and reception time of each distance-measuring signal based on the power-on time of the system. However, the present invention is not limited to this time, and the time information which is synchronized between the screen unit 1 and the projector 2 is given to them in the case where the accurate time information is given from inside or outside a vehicle on a regular basis. Therefore, in the case where such time information is given, the screen unit 1 may transmit distance-measuring signals, each of which includes its own transmission time. By doing so, the projector 2 can know the transmission time of each distance-measuring signal.

The screen unit 1 of the present embodiment is mounted inside a vehicle using the supporting member 12 and the shaft 13. However, these are not essential components, and the screen unit 1 may be structured so that the user who carries the screen unit 1 with him/her can view the image. Alternatively, the body of the screen unit 1 may be structured to be removable from the shaft 13. In this case, it is preferable that the shaft 13 is equipped with a holder for supporting the body of the screen unit 1. More preferably, the video display system is powered on when the body is mounted to the holder.

The picture parameters in the present embodiment are a ratio between two sides of a corrected picture which are opposed to each other, or four vertices of the corrected picture. However, the present invention is not limited to these parameters, and one point on the image receiving surface 11 and the intersecting angle between the optical axis of the projector 2 and the image receiving surface 11 may be derived, as picture parameters.

Furthermore, in the present embodiment, the projection light does not sometimes impinge on the first to third light detectors 14a to 14c if the user brings the screen unit 1 close to the projector 2 because the projector 2 and the screen unit 1 are placed as shown in FIG. 31. Therefore, it is preferable that the projector 2 further projects colorless light around the video image displayed by the projection light.

### (First Modification)

In the present embodiment, the projector 2 calculates the distances from the projector 2 to the three corners of the image receiving surface 11 based on the differences between the arrival times and transmission times of respective distance-measuring signals. However, the present invention is not limited to these differences, and the screen unit may transmit the positional information including the coordinate positions of the three corners of the image receiving surface 11 relative to a predetermined reference position so that the projector calculates the distances from the projector itself to the three corners of the image receiving surface 11 based on the positional information.

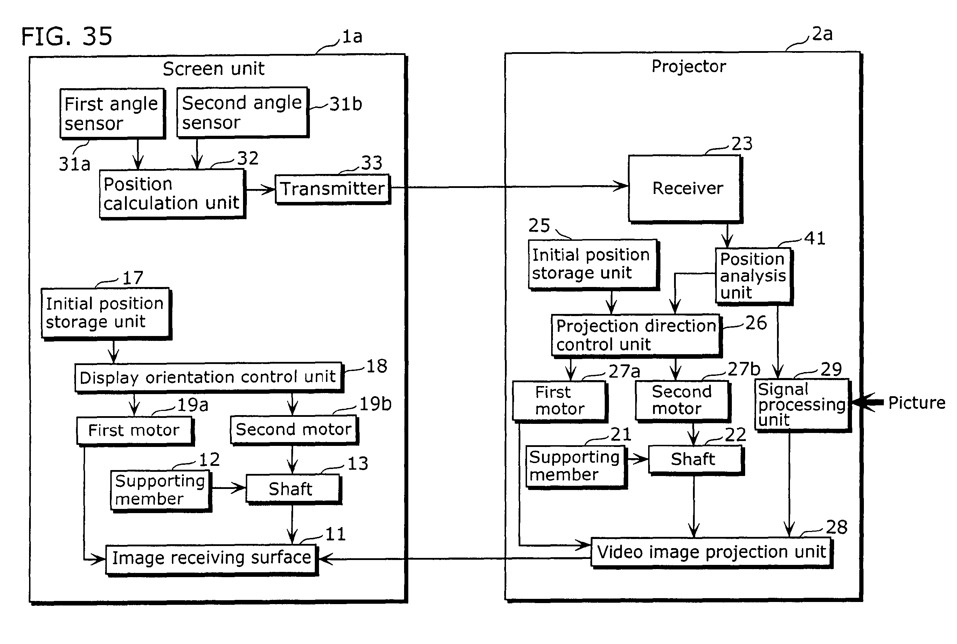

FIG. 35 is a structure diagram showing structures of a screen unit and a projector in the video display system according to the first modification of the present embodiment.

The screen unit 1a includes a first angle sensor 31a, a second angle sensor 31b, a position calculation unit 32 and a transmitter 33, instead of the first to third light detectors 14a to 14c, the first to third transmitters 15a to 15c and the transmission control unit 16 included in the screen unit 1 shown in FIG. 28. It should be noted that the same reference numbers are assigned to the elements identical to the elements included in the screen unit 1 shown in FIG. 28 among the elements included in the screen unit 1a, and the detailed description thereof is not repeated.

The first angle sensor 31a detects the angle by which the image receiving surface 11 is now pivoted from the reference position toward the azimuth direction, and outputs the detected azimuth angle to the position calculation unit 32. The second angle sensor 32b detects the angle by which the image receiving surface 11 is now pivoted from the reference position toward the elevation direction, and outputs the detected elevation angle to the position calculation unit 32.

The position calculation unit 32 previously holds the coordinate positions (hereinafter referred to as initial coordinate positions) of the three corners of the image receiving surface 11 in the above-mentioned initial display position. The position calculation unit 32 derives the coordinate positions (hereinafter referred to as current coordinate positions) of the three corners of the image receiving surface 11 after being pivoted from the initial display position, according to the azimuth angle and elevation angle detected by the first and second angle sensors 31a and 31b, and outputs the current coordinate positions to the transmitter 33. The transmitter 33 transmits the positional information indicating the current coordinate positions obtained from the position calculation unit 32. Note that the transmitter 33 does not need to be placed near the corner of the image receiving surface 11, and may be placed at the position where the projector 2 can receive the positional information.

The projector 2a differs from the projector 2 shown in FIG. 28 in that the former includes a position analysis unit 41 instead of the positional analysis unit 24. Note that the same reference numbers are assigned to the elements identical to the elements included in the projector 2 shown in FIG. 28 among the elements included in the projector 2a, and the detailed description thereof is not repeated.

The position analysis unit 41 calculates the distances from the three corners of the image receiving surface 11 to the projector 2a, as first to third distances, using the positional information received via the receiver 23. Note that the position analysis unit 41 can calculate the first to third distances without using the propagation times of signals, so the transmitter 33 and receiver 23 may be connected to each other not only by wireless but also by wire.

It should be noted that the above-mentioned screen unit 1a of the first modification does not include the first to third light detectors 14a to 14c, but it may include these detectors. In this case, the screen unit 1a transmits the positional information including the first to third detection signals outputted from these light detectors 14a to 14c.

The position calculation unit 32 may output the polar coordinate values, namely the current azimuth and elevation angles to the transmitter 33.

In the case where the position of the image receiving surface 11 can also be changed toward the above Z axis direction, the screen unit 1a detects the position relative to the reference position in the X axis direction, and derives the current coordinate position including the detected position in the Z axis direction.

### (Second Modification)

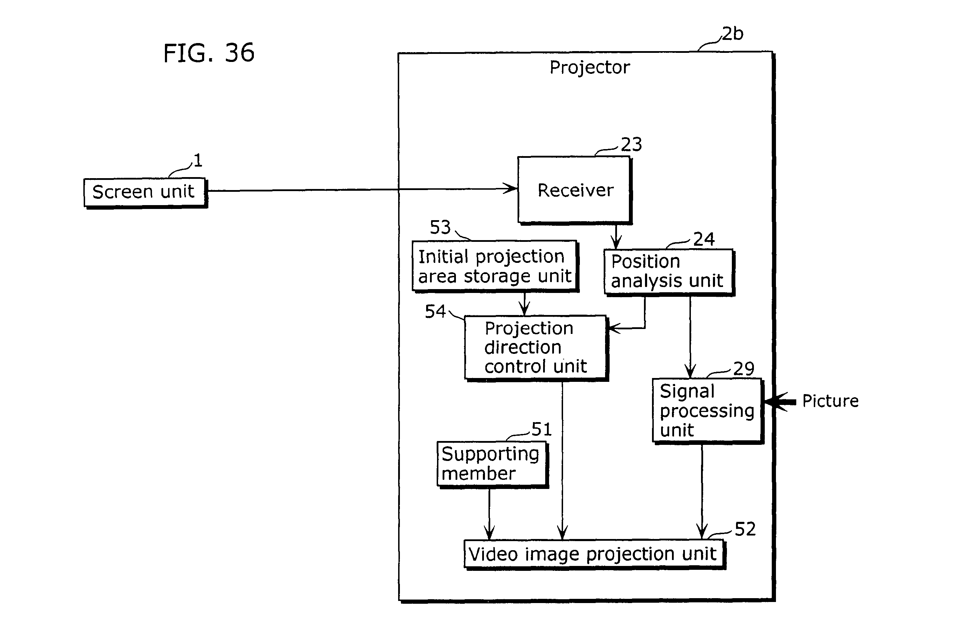

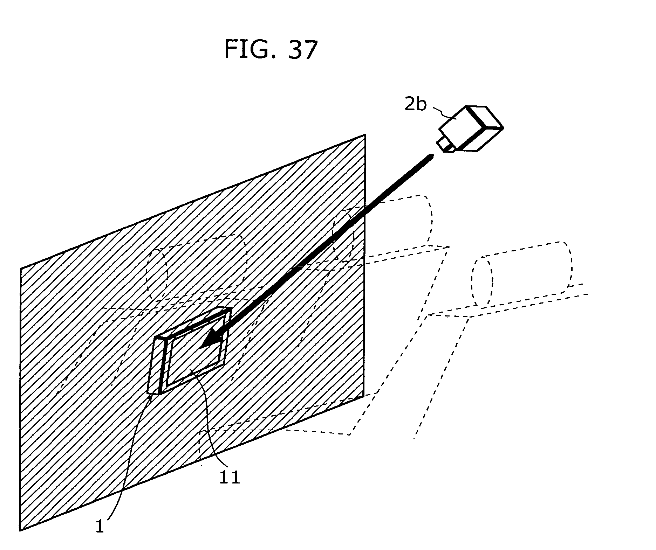

As shown in FIG. 27, the projector 2 of the present embodiment is structured so that it can be pivoted about both the X axis and the Y axis by the supporting member 21 and the shaft 22. However, the present invention is not limited to this structure, and the projector 2 may be fixed in a vehicle to suppress its pivoting. A description is given below of such a projector according to the second modification with reference to FIG. 36 and FIG. 37. Note that the screen unit 1 of the second modification has the same structure as that shown in FIG. 28, so the description thereof is not repeated.

FIG. 36 is a structure diagram showing a structure of a projector according to the second modification of the present embodiment.

A projector 2b includes a supporting member 51, a video image projection unit 52, an initial projection area storage unit 53 and a projection direction control unit 54, instead of the supporting member 21, the shaft 22, the initial position storage unit 25, the projection direction control unit 26, the first motor 27a and the second motor 27b included in the projector 2 shown in FIG. 28. It should be noted that the same reference numbers are assigned to the elements identical to the elements included in the projector 2 shown in FIG. 28 among the elements included in the projector 2b, and the detailed description thereof is not repeated.

The supporting member 51 fixes the body of the projector 2b on the ceiling of a vehicle. Here, preferably, the supporting member 51 supports the projector 2b so that the optical axis of the projector 2b becomes orthogonal to the image receiving surface 11 when the screen unit 1 stands still at the initial display position.

The initial projection area storage unit 53 is typically comprised of a nonvolatile memory, and stores the coordinate positions of the three corners of the image receiving surface 11 at the time when the screen unit 1 stands still at the initial display position. Note that the initial projection area storage unit 53 may store the coordinate positions of the four corners of the image receiving surface 11.

The projection direction control unit 54 instructs the video image projection unit 52 about the positions corresponding to the coordinate positions in the initial projection area storage unit 53, namely the projection direction for projecting a video image onto the image receiving surface 11 placed at the initial display position. Furthermore, the projection direction control unit 54 instructs the video image projection unit 52 about the projection direction for eliminating the positional deviation, based on the deviation notified from the position analysis unit 24.

The video image projection unit 52 has an optical system including a lens and a mirror, and projects, onto the image receiving surface 11, light indicating the details of the picture of the picture signal outputted from the signal processing unit 29, according to the instruction from the projection direction control unit 54.

FIG. 37 is a diagram showing a projection range of the video image projection unit 52 of the projector 2b.

As shown in FIG. 37, the video image projection unit 52 has the projection range (See the diagonally shaded area) wider than the movable range of the screen unit 1, and projects the light for displaying the video image onto the image receiving surface 11 of the screen unit 1, using a part of the projection range. In other words, when the screen unit 1 is moved, the video image projection unit 52 projects the above light onto the image receiving surface 11 of the screen unit 1 which has been moved, according to the instruction from the projection direction control unit 54.

Here, the video image projection unit 52 does not change the projection direction mechanically as mentioned above, but changes the projection direction electrically or optically. In other words, the video image projection unit 52 performs coordinate transformation processing of the picture indicated by the picture signal so that the video image is displayed only within the image receiving surface 11 in the above projection range.

### (Third Modification)

In the present embodiment, as shown in FIG. 28, the projector 2 detects the position of the image receiving surface 11 using respective distance-measuring signals outputted from the screen unit 1. However, the present invention is not limited to these signals, and the projector may derive the position of the image receiving surface 11 using the image captured by the imaging device having the angle of view which covers at least the movable range of the screen unit.

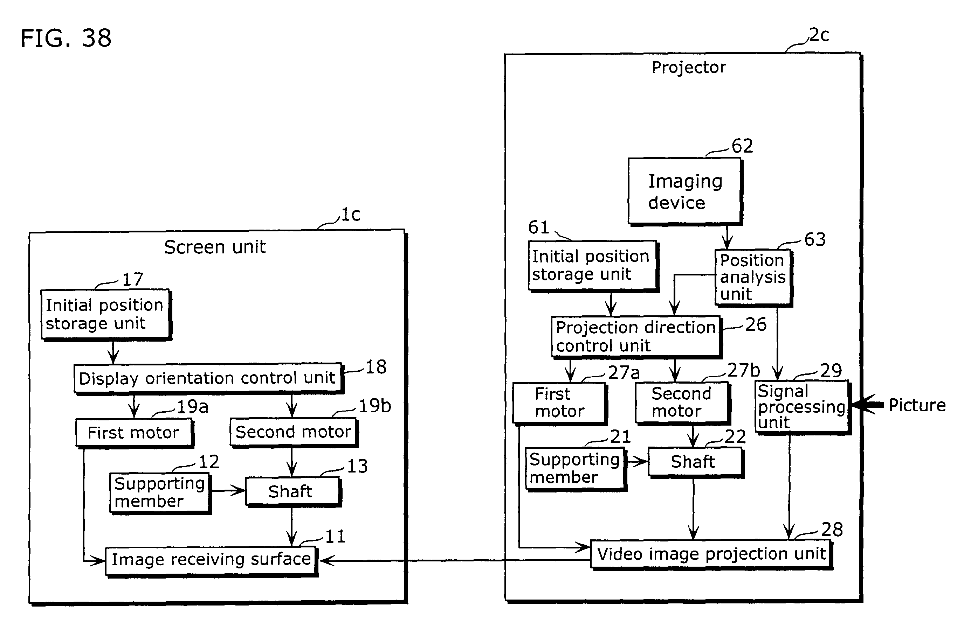

FIG. 38 is a structure diagram showing structures of a screen unit and a projector in a video display system according to the third modification of the present embodiment.

This video display system includes a screen unit 1c and a projector 2c.

The screen unit 1c includes the image receiving surface 11, the supporting member 12, the shaft 13, the initial position storage unit 17, the display orientation control unit 18, the first motor 19a and the second motor 19b. Note that all the elements included in the screen unit 1c are identical to a part of the elements included in the screen unit 1 shown in FIG. 28, so the detailed description thereof is not repeated.

The projector 2c includes an initial position storage unit 61, an imaging device 62 and a position analysis unit 63 instead of the receiver 23, the position analysis unit 24 and the initial position storage unit 25 of the projector 2 shown in FIG. 28. Note that the same reference numbers are assigned to the elements identical to the elements included in the projector 2 shown in FIG. 28 among the elements included in the projector 2c, and the detailed description thereof is not repeated.

The initial position storage unit 61 is typically comprised of a nonvolatile memory, and further stores the initial display position of the screen unit 1 in addition to the above-mentioned initial projection position. In the present modification, the initial display position is preferably registered by the installer and indicates the coordinate positions of the three corners of the image receiving surface 11 in the case where the optical axis of the projector 1c is orthogonal to the image receiving surface 11 of the screen unit 1c.

The imaging device 62 has the angle of view which covers at least the movable range of the screen unit 1.

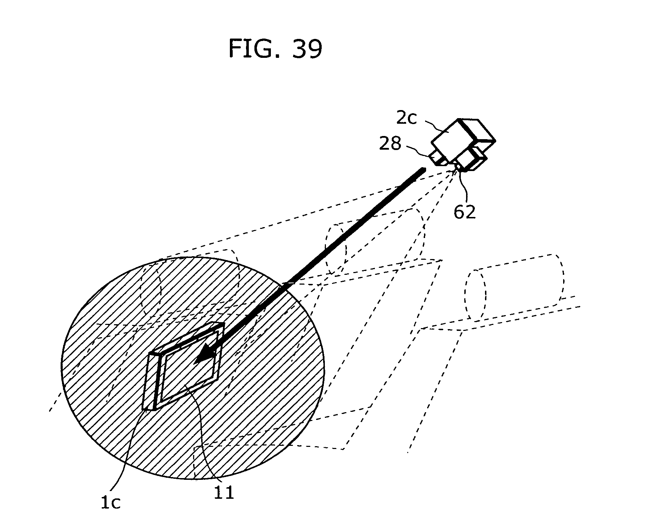

FIG. 39 is a diagram showing the angle of view of the imaging device 62 of the projector 2c.

The imaging device 62 captures the image of the current status of the screen unit 1, and outputs the image obtained as a result of the image capture to the position analysis unit 63.

The position analysis unit 63 extracts the outline of the screen unit 1c based on the image obtained from the imaging device 62, and further derives the coordinate positions of the three corners of the image receiving surface 11 as feature points. Then, the position analysis unit 63 measures the above-mentioned first to third distances using the derived feature points, and further detects the positional deviation of the video image.

It should be noted that the description is given on the assumption that the projector 2c of the present modification includes one imaging device 62. However, the present invention is not limited to one imaging device, and the projector 2c may include a plurality of imaging devices for deriving the above first to third distances by stereovision using a plurality of captured images.

Although the present invention has been described with reference to the first to seventh embodiments and their modifications, it is not limited to these embodiments and modifications.

For example, differently from the seventh embodiment, no processing is performed for eliminating image distortion in the first to sixth embodiments. However, it is possible to measure the distances from the three parts of the screen unit to the projector so as to eliminate the distortion based on the measurement result as is the case with the seventh embodiment. Also, although the fifth embodiment includes two light detection units (1161 and 1162), it may include three or more light detection units for eliminating the distortion of the video image to be displayed on the screen unit, based on the detection results of these light detection units. In this case, the screen information processing unit 1253 of the fifth embodiment detects the distortion of the video image to be displayed on the screen unit, based on the detection results of these three or more light detection units, and the picture signal output unit 101 changes the shape of the picture indicated by the picture signal so as to suppress the detected distortion.

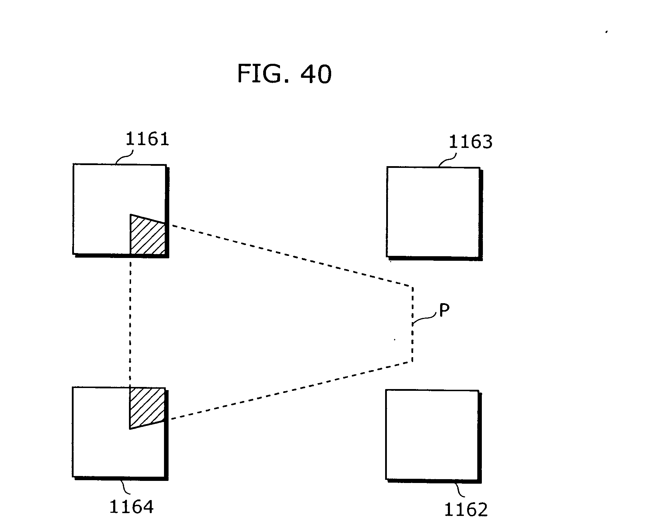

FIG. 40 is an illustration for describing the processing of the video display system including four light detection units for eliminating video image distortion.

For example, the screen unit includes four light detection units 1161 to 1164. When only the light detection units 1161 and 1164 detect the projected light whereas the light detection units 1162 and 1163 do not detect the projected light, the screen information processing unit 1253 understands that distortion occurs in a video image P and detects the distortion of the video image P. Then, the screen information processing unit 1253 notifies the picture signal output unit 101 of the distortion of the video image P via the transmission unit 1254. The picture signal output unit 101 performs signal processing on the picture signal based on the distortion so as to change the shape of the picture indicated by the picture signal. As a result, the distortion of the video image P is eliminated.

The first to seventh embodiments have been described on the assumption that the video display system is installed in a vehicle, but the present invention is not limited to the inside of the vehicle. The video display system may be installed in any human life space.

The elements included in the first to seventh embodiments respectively may be combined. Accordingly, even if vibrations occur or the user changes the position of the projector or the screen unit, it is possible to suppress the variations of the video image display position or the distortion of the video image more reliably and therefore improve his/her viewing comfort.

### Industrial Applicability

The video display system according to the present invention can suppress the variations of the video image display position for improvement in viewing comfort, and is suitable for in-vehicle equipment for displaying a motion picture or the like on a screen in a vehicle, for example.

## Claims

1. A video display system for displaying a video image, comprising:
a video projection light outputting unit operable to output a video projection light for displaying a video image;
an image receiving unit operable to display the video image by receiving the video projection light;
a displacement deriving unit operable to detect a display position of the video image to be displayed on said image receiving unit, and to derive a displacement of the display position of the video image; and
a video projection light controlling unit operable to control an output mode of the video projection light so as to suppress the displacement derived by said displacement deriving unit.

2. The video display system according to Claim 1,
wherein said displacement deriving unit includes a light sensor which detects the video projection light received by said image receiving unit and outputs a light detection signal corresponding to a result of the detection, and said displacement deriving unit is operable to derive the displacement of the display position of the video image based on a change in the light detection signal outputted from said light sensor.

3. The video display system according to Claim 1,
wherein said displacement deriving unit includes an imaging unit operable to capture the video image to be displayed on said image receiving unit, and said displacement deriving unit is operable to derive the displacement of the display position of the video image based on a result of the image capture by said imaging unit.

4. The video display system according to Claim 1,
wherein said video projection light controlling unit is operable to change a direction of the video projection light.

5. The video display system according to Claim 4,
wherein said video projection light controlling unit includes a reflecting mirror which receives the video projection light, and said video projection light controlling unit is operable to pivot said reflecting mirror so as to change the direction of the video projection light.

6. The video display system according to Claim 4,
wherein said video projection light controlling unit is operable to pivot said video projection light outputting unit so as to change the direction of the video projection light.

7. The video display system according to Claim 1,
wherein said video projection light controlling unit is operable to change an output position in said video projection light outputting unit, from which the video projection light is outputted.

8. The video display system according to Claim 7,
wherein said video projection light outputting unit is operable to generate a video projection light which represents a picture, based on a picture signal indicating details of the picture, and
said video projection light controlling unit is operable to change the output position in said video projection light outputting unit by performing signal processing on the picture signal so as to change a position of the picture indicated by the picture signal.

9. The video display system according to Claim 1,
wherein said video projection light outputting unit is a projector which projects a video projection light in a predetermined direction, and
said image receiving unit includes a display screen which receives the video projection light and displays the video image.

10. The video display system according to Claim 9,
wherein said video projection light outputting unit includes a filtering unit operable to make a light transmittance per pixel variable, and said video projection light outputting unit is operable to generate a video projection light from a light transmitted through said filtering unit, and
said video projection light controlling unit is operable to change an output position in said video projection light outputting unit, from which the video projection light is outputted, by moving said filtering unit.

11. The video display system according to Claim 9,
wherein said video projection light outputting unit includes a video image reflecting unit operable to make a light reflectivity per pixel variable, and said video projection light outputting unit is operable to generate a video projection light from a light reflected by said video image reflecting unit, and
said video projection light controlling unit is operable to change an output position in said video projection light outputting unit, from which the video projection light is outputted, by moving said video image reflecting unit.

12. The video display system according to Claim 1,
wherein said video projection light outputting unit is operable to output the video projection light so as to be viewed directly, and
said image receiving unit includes a reflecting mirror which reflects the video projection light so as to display the video image.

13. The video display system according to Claim 1, further comprising
a distortion detecting unit operable to detect a distortion in a video image to be displayed on said image receiving unit, and
said video projection light controlling unit is further operable to control an output mode of the video projection light so as to suppress the distortion in the video image detected by said distortion detecting unit.

14. The video display system according to Claim 13,
wherein said video projection light outputting unit is operable to generate the video projection light which represents a picture, based on a picture signal indicating details of the picture,
said distortion detecting unit is operable to detect the distortion in the video image by detecting a distance between said video projection light outputting unit and each of at least three parts on an image receiving surface of said image receiving unit for receiving a video projection light, and
said video projection light controlling unit is operable to change a shape of the picture indicated by the picture signal so as to suppress the distortion in the video image detected by said distortion detecting unit.

15. The video display system according to Claim 14,
wherein in the case where the picture indicated by the picture signal is rectangular, said video projection light controlling unit is operable to derive, based on the distance detected by said distortion detecting unit, one of (a) a ratio between two sides of the picture which are approximately opposed to each other and (b) a coordinate position of each vertex of the picture, as a parameter which represents a shape-changed picture, and to change the shape of the picture indicated by the picture signal according to the parameter.

16. The video display system according to Claim 15,
wherein said distortion detecting unit includes:
a transmitting unit operable to transmit a radio signal from the each part on the image receiving surface;
a receiving unit operable to receive the radio signal transmitted from the each part, at a position where said video projection light outputting unit is placed; and
a distance deriving unit operable to measure time between the transmission of the radio signal from said transmitting unit and the reception of the radio signal at said receiving unit, and to derive a distance between the each part and said video projection light outputting unit.

17. The video display system according to Claim 15,
wherein said distortion detecting unit includes:
a position detecting unit operable to detect a position of the each part on the image receiving surface; and
a distance deriving unit operable to derive a distance between the each part and said video projection light outputting unit based on a result of the detection by said position detecting unit.

18. The video display system according to Claim 14,
wherein said distortion detecting unit includes:
an imaging unit operable to capture an image of said image receiving unit; and
a distance deriving unit operable to derive a distance between the each part on the image receiving surface and said video projection light outputting unit based on a result of the image capture by said imaging unit.

19. The video display system according to Claim 13,
wherein said video projection light outputting unit is operable to generate the video projection light which represents a picture based on a picture signal indicating details of the picture, and
said video display system further comprises:
a position detecting unit operable to detect a display position of a video image to be displayed on said image receiving unit; and
a video image position keeping unit operable to keep the display position of the video image so that the video image is displayed within a predetermined area on said image receiving unit, by performing signal processing on the picture signal so as to change a position of the picture indicated by the picture signal, based on a result of the detection by said position detecting unit.

20. The video display system according to Claim 19,
wherein said position detecting unit includes a light sensor which detects the video projection light received by said image receiving unit and outputs a light detection signal corresponding to a result of the detection, and said position detecting unit is operable to detect the display position of the video image based on the light detection signal outputted from the light sensor.

21. The video display system according to Claim 13, further comprising:
an imaging unit operable to capture an image of said image receiving unit; and
a video image position keeping unit operable to keep a display position of the video image so that the video image is displayed within a predetermined area on said image receiving unit, by changing a direction of the video projection light outputted from said video projection light outputting unit, based on a result of the image capture by said imaging unit.

22. The video display system according to Claim 13, further comprising
a pivoting unit operable to pivot said image receiving unit so as to change an orientation of an image receiving surface of said image receiving unit for receiving a video projection light.
